# EUROPEAN PATENT SPECIFICATION

(11) **EP 2 618 553 B1**
(45) Date of publication and mention of the grant of the patent: **06.11.2019**
(21) Application number: 13152403.5
(22) Date of filing: 23.01.2013
(51) Int. Cl.: H04N 1/00, H04N 1/32, H04N 1/44

(54) **Network scanning system, and scanned image upload method**
Netzwerkscansystem und Bilddatenhochladeverfahren
Système de scanner en réseau et procédé de téléchargement de données d'image

(30) Priority: 23.01.2012 US 201213356554
(43) Date of publication of application: 24.07.2013
(73) Proprietor: Brother Kogyo Kabushiki Kaisha, Nagoya, Aichi 467-8561 (JP)
(72) Inventor: Pradhan, Salil, Nagoya, Aichi 467-8562 (JP); Marsh, Gary, Nagoya, Aichi 467-8562 (JP); Sasaki, Ichiro, Nagoya, Aichi 467-8562 (JP); Yasui, Kunihiro, Nagoya, Aichi 467-8562 (JP); Takafumi, Mori, Nagoya, Aichi 467-8562 (JP)
(74) Representative: J A Kemp LLP

(56) References cited:
- WO-A1-2011/105013
- US-A1- 2006 026 434
- US-A1- 2006 143 286
- US-A1- 2007 033 588
- US-A1- 2008 068 647
- US-A1- 2008 120 707
- US-A1- 2009 116 052
- US-A1- 2009 201 541
- US-A1- 2009 296 133
- US-A1- 2010 033 763
- US-A1- 2011 238 832
- US-B1- 6 782 426
- US-B1- 7 231 660

## Description

### BACKGROUND OF THE DISCLOSURE

### 1. Field of the Invention

The present invention relates generally to a data server. Specifically, the invention relates to a method of uploading data to a web site in a network, in response to operation information operated on the web site.

### 2. Related Art

When transmission and reception of a significant volume of data is implemented using a network, various kinds of data are uploaded to various web services. For example, an image is scanned by an image scanner device, e.g., a scanner, and is converted into image data. The converted data are uploaded to a storage device in a network from the image scanner device or from a computer connected to the image scanner device. The data uploaded to the storage device are set to be utilized by a user via a web service.

In a known method, a user executes an application to operate the image scanner device when uploading image data to a web service. Specifically, the user operates the image scanner device by executing a scanner application different from the web service. Image data are acquired by the image scanner device scanning an image using the scanner application.

US 6,782,426 describes a shared device control method and server-client system, which inform the client user of the state of a shared device upon accessing the connectable shared device on the network, thereby preventing unwanted situations (for example, the user cannot determine what has happened; the user cannot obtain a desired access result; access results in other fatal errors; and so forth). A shared device, to be shared by a plurality of data processing apparatuses connected via a network, is controlled by one of the plurality of data processing apparatuses, and the other data processing apparatuses inquiries of the data processing apparatus controlling the shared device, a reserve or ready state of the shared device, or a mode which displays a window via the network, prior to use of the shared device informs the client user of the state of the shared device. WO 2011/105013 A describes an image processing apparatus having a web browser and being capable of using an external service provided by at least one external server including a reception unit configured to receive service information transmitted by the external server; a web server unit configured to generate screen information for displaying an operation screen on the web browser based on the service information received by the reception unit; a display control unit configured to display the operation screen on the web browser based on the screen information generated by the web server unit; and a communication control unit configured to transmit and acquire image data to/from the external server in response to a user instruction input via the operation screen displayed on the web browser. US 2009/0296133 A describes an image processing apparatus including a display, an obtaining unit obtaining second data containing information for identifying the link information having no image data in a corresponding storage position among the plural pieces of link information contained in the first data, a display control unit making the display selectively display first link information having image data in a corresponding storage position and second link information having no image data in the corresponding storage position in different formats based on the second data, and a transmission unit transmitting image data generated by a scanning unit to the corresponding storage position. US 2006/0026434 A describes an image forming apparatus (for example, MFP (Multi Function Peripheral)) comprising an authentication part which performs user authentication by communicating with an authentication server, a storing part which stores "use-permission-information" for setting permission and/or prohibition of use of the apparatus for each user, and a determining part which determines permission and/or prohibition of the use of the apparatus by a user authorized by the authentication part on the basis of the use-permission-information. US 2008/0068647 A describes an authentication server receiving user information from an MFP, and acquiring information on a service available for the user. The authentication server creates information on a menu screen having a selection function of selecting the service available for the user based on the acquired service information. The MFP receives the customized menu screen provided from the authentication server, and displays the menu screen on a display device. US 2009/0201541 A describes a method of controlling a scanner to improve automatic recognition and classification of scanned physical documents for a document analysis system, which receives and processes jobs containing at least one electronic document from a plurality of users to automatically recognize and classify the job documents into document categories. The method comprises, using a scan control system, obtaining the capability of, and existing scanner settings for, the scanner upon receiving a command to initiate scanning of physical documents; saving the existing scanner settings of the scanner; automatically commanding the scanner to use new scanner settings, wherein the new scanner settings are selected in accordance with the capability of the recognition system; commanding the scanner to begin operation with the new scanner settings; and automatically resetting the scanner settings of the scanner back to the saved existing scanner settings upon completing of the scanning operation. US 2008/0120707 A describes systems, methods and apparatus for authenticating a query device using a centralized data server include(ing?) associating and storing, on the server, for each respective device in a plurality of devices, a device identifier, a user identifier, and a synthesized security identifier that collectively authenticate the respective user device. An authentication request is received, at the centralized server, from an intermediary gateway server seeking verification of the query device. The request has a query device identifier or a query synthesized security identifier. Verification, at the centralized data server, of the query device is done by searching for a match between the query device identifier and a stored device identifier and a match between the query synthesized security identifier and a stored synthesized security identifier. The centralized data server communicates to the intermediary gateway server whether the identity of the query device is verified. US 2011/0238832 A describes that selected processes are associated with sets of specific network addresses, and the associations are stored. When a selected process creates a child process, an association between the child process and the set of network addresses with which the parent process is associated is stored. When a selected process is deleted, the association between the selected process and its set of network addresses is deleted. Each selected process is restricted to network address-based communication via its associated set of network addresses. Certain communication protocol subroutines associated with network address-based communication are intercepted by an interception module. The interception module detects attempts by selected processes to communicate via network address. If a selected process attempts to communicate via an unassociated network address, the attempted communication is prohibited. US 2007/0033588 A describes client-server architectures for allowing generic upload and download functionality between a web application at a server and a client. One exemplary method includes sending a download/upload request to a web application at the server, where the download/upload request specifies at least one file to download/upload; receiving a transmission from the server; parsing the transmission to identify a download/upload command and an associated download/upload manifest, where the download/upload manifest includes executable code that, when executed on the client, will perform the download/upload of the at least one file. US 7,231,660 describes a method and system for preventing unauthorized dynamic host configuration servers from responding to client configuration requests in an Internet Protocol (IP) network. Multiple network clients are simulated within a server checker client. At least one unauthorized dynamic host configuration server is then detected utilizing the server checker client within said IP network. Upon detection of an unauthorized dynamic host configuration server, configuration requests are delivered from the server checker client to the detected unauthorized dynamic configuration server such that the unauthorized dynamic host configuration server is unable to respond to configuration requests from actual network clients. US 2009/0116052 describes an MFP device and a storage server connected to each other via a network. A user authentication is performed to acquire user information. Job information associated with the user information is acquired from the storage server. When scanning or printing is interrupted, scan or print setting information set before the interruption, and optionally the image data scanned before the interruption, are acquired. The MFP device performs the scanning or printing based on the setting information acquired from the storage server at the time of restart. US 2006/0143286 A describes an image processing device is configured to provide a service relating to at least one of (1) the image data generated by the function of the image processing device and (2) image data representing the image to be formed, in response to a request from the image processing device. The image processing device may include a parameter designating unit, a service request unit, and a function implementation unit that is adapted to implement the function of the image processing device based on the service providing parameter designated by the parameter designating unit. The service providing device is provided with a service provision executing unit that is adapted to execute a process to provide the service to the image processing device after receiving the request from the service request unit provided to the image processing device.

### SUMMARY OF THE INVENTION

In order to use the scanned image data in a web service, the user uploads the image data to the web. The user specifies a web service, to which the image data are to be uploaded, by operating the image scanner device or a computer connected to the image scanner device. The image data then are uploaded to the specified web service by the user operating the image scanner device or the computer. Thus, when uploading data to a network service to be utilized, the user starts up a scanner application different from the network service, such that the user executes a plurality of procedures for uploading, which is inconvenient for the user.

A need has arisen for a data server, a network system, and an upload method, with which data are automatically uploaded to a web site by an image scanner device connected to a network, in response to operation information operated in a web service.

According to the present invention, there is provided a network system as defined in appended claim 1.

According to the present invention, there is provided an upload method as defined in appended claim 10. Other objects, features, and advantages of an embodiment of the invention will be apparent to persons of ordinary skill in the art from the following description of an embodiment with reference to the accompanying drawing.

### BRIEF DESCRIPTION OF THE DRAWINGS

For a more complete understanding of the present invention, needs satisfied thereby, and the objects, features, and advantages thereof, reference now is made to the following descriptions taken in connection with the accompanying drawings.
**Fig. 1** is a configuration diagram of a network system according to a first embodiment of the invention.
**Fig. 2** is a diagram depicting a process of operating a scanner device from a network service according to the first embodiment of the invention.
**Fig. 3** is a diagram of a scan icon displayed on a web page provided by an external server according to the first embodiment of the invention.
**Fig. 4** is a diagram depicting a method in which image data scanned by a scanner device are browsed by an information processing device via a network service according to the first embodiment of the invention.
**Fig. 5** is a diagram depicting an electrical configuration of a central server according to the first embodiment of the invention.
**Fig. 6** is a diagram depicting an electrical configuration of a scanner device according to the first embodiment of the invention.
**Fig. 7** is a flowchart depicting a main process of the central server according to the first embodiment of the invention.
**Fig. 8** is another flowchart depicting the main process of the central server according to the first embodiment of the invention.
**Fig. 9** is a flowchart depicting a main process of an external server according to the first embodiment of the invention.
**Fig. 10** is another flowchart depicting the main process of the external server according to the first embodiment of the invention.
**Fig. 11** is a flowchart depicting a main process of a scanner device according to the first embodiment of the invention;
**Fig. 12** is a flowchart depicting a main process of the central server according to a second embodiment of the invention.
**Fig. 13** is another flowchart depicting the main process of the central server according to the second embodiment of the invention.
**Fig. 14** is still another flowchart depicting the main process of the central server CS according to the first embodiment of the invention.
**Fig. 15** is flow chart depicting a main process of an external server according to the second embodiment of the invention.

### DETAILED DESCRIPTION OF EMBODIMENTS OF THE INVENTION

For a more complete understanding of the present invention, needs satisfied thereby, and the objects, features, and advantages thereof, reference now is made to the following description taken in connection with the accompanying drawings.

### 1. Configuration of Network System S

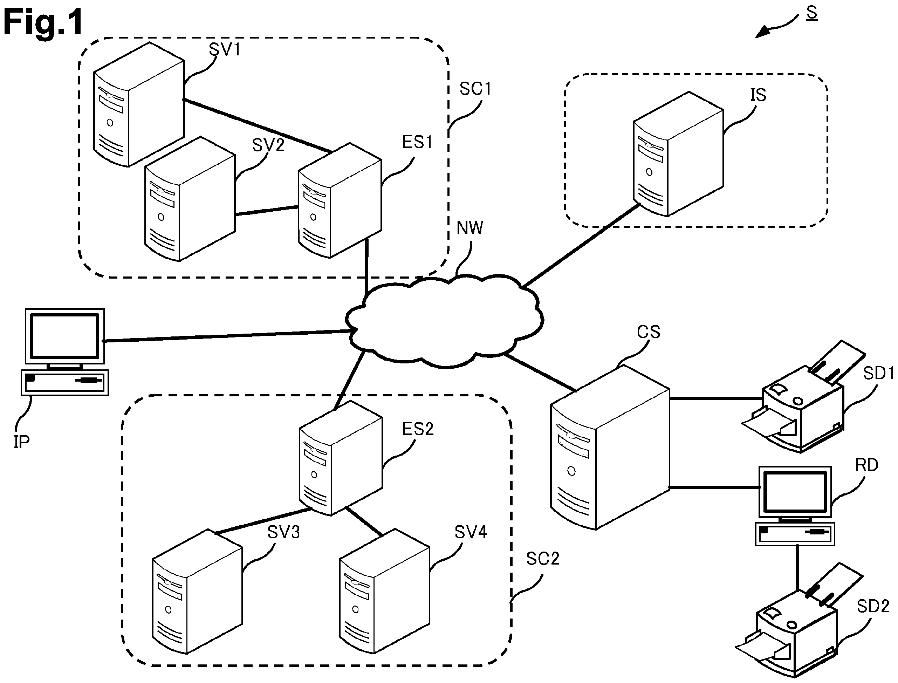

As shown in **Fig. 1****,** the network system S may comprise a central server CS. The network system S may further comprise a first scanner device SD1, a second scanner device SD2, and a relay device RD. The first scanner device SD1 may be connected directly to the central server CS, without a relay device. The second scanner device SD2 may be connected to the central server CS via the relay device RD. The relay device RD may comprise a general personal computer. Also, the first scanner device SD1 and second scanner device SD2 may be devices that are configured to scan an image. In another example, the first scanner device SD1 or second scanner device SD2 may comprise printing devices that include a scanner function.

The network system S may comprise an internal server IS. The internal server IS may be a server device provided by the manufacturer of manufacturers of the first scanner device SD1 and second scanner device SD2. The first scanner device SD1 and second scanner device SD2 may upload document data to the internal server IS by accessing the internal server IS.

The network system S may comprise a first network service SC1 and a second network service SC2. The first network service SC1 may comprise an external server ES1. The second network service SC2 may comprise an external server ES2.

The external server ES1 may provide the first network service SC1 from a company different from the manufacturer or manufacturers of the scanner devices. The external server ES2 may provide the second network service SC2 from a company different from the manufacturer or manufacturers of the scanner devices and from the company of the external server ES1. The external server ES1 and external server ES2 may be server devices managed by different companies that provide services via a network NW. The external server ES1 and external server ES2 may be web servers used for providing services.

The first network service SC1 may comprise a first storage server SV1 and a second storage server SV2. The second network service SC2 may comprise a third third storage server SV3 and a fourth storage server SV4. In another embodiment, the external server ES1 or external server ES2 may comprise a storage area for data utilized in a network service, instead of storage servers.

The network system S may comprise an information processing device IP. The information processing device IP may utilize services provided by the first network service SC1 and second network service SC2. Specifically, the information processing device IP may acquire a web page information from the external server ES1 or external server ES2, and utilize the first network service SC1 and second network service SC2. The information processing device IP may utilize data stored in the storage servers SV1, SV2, SV3, and SV4 via the first network service SC1 and second network service SC2, respectively.

The information processing device IP may utilize a service provided by the internal server IS. In one embodiment, the information processing device IP may be a general personal computer. In another embodiment, the information processing device IP may be a portable terminal device, e.g., a smartphone or the like. The information processing device IP may be a device that processes information. As shown in **Fig. 1****,** the central server CS, first scanner device SD1, relay device RD, information processing device IP, internal server IS, external server ES1, and external server ES2 may communicate with each other via the network NW.

### 2. Processes of Network System S

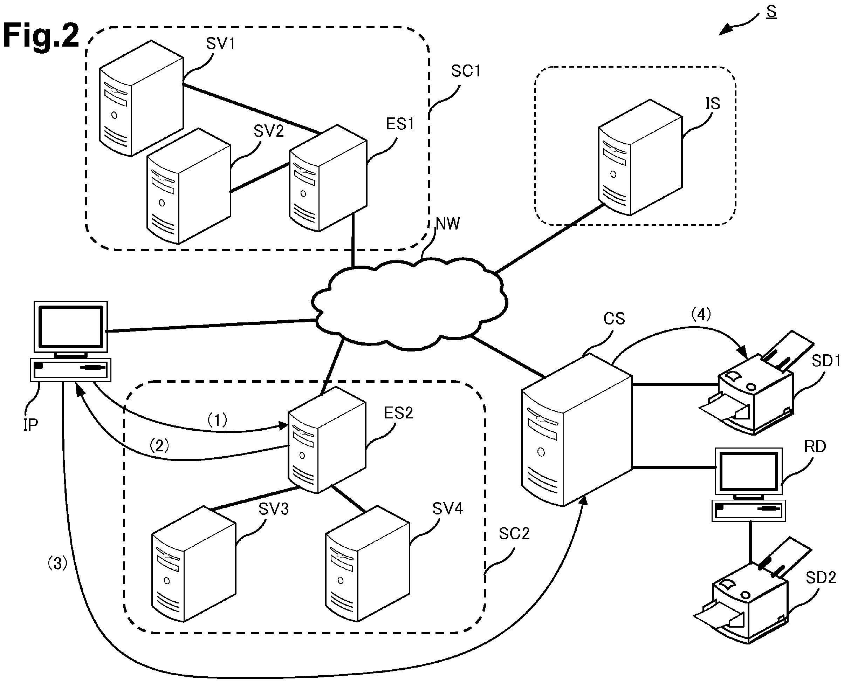

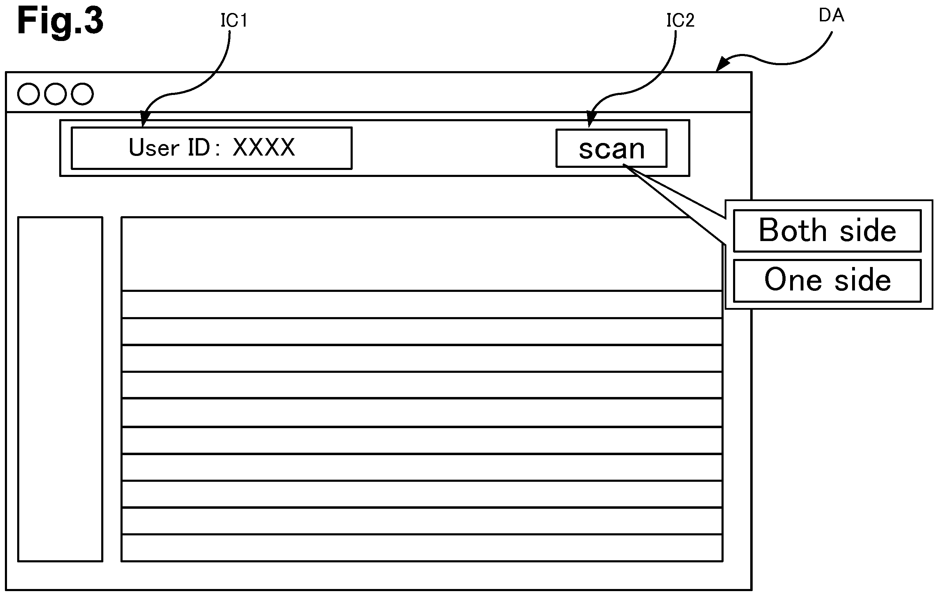

As shown in **Fig. 2****,** the information processing device IP may access the external server ES2, e.g., arrow (1) in **Fig. 2****.** The information processing device IP may acquire a web page from the external server ES2, e.g., arrow (2) in **Fig. 2****.** A web page provided by the external server ES2 may be acquired by the information processing device IP. The acquired web page may enable the information processing device IP to use the second network service SC2. As shown in **Fig. 3****,** the acquired web page may be displayed by a display unit controlled by the information processing device IP. A log-in process may be executed to grant access to the second network service SC2.

In a first embodiment, a web page including a user ID icon IC1 and a scan icon IC2 may be displayed on the display screen DA. The user ID may indicate an ID of a user logged in to the first network service SC1 or second network service SC2. The user ID input when executing the log-in process may be displayed in the user ID icon IC1. The scan icon IC2 may be operated by a user of the information processing device IP. The scan icon IC2 may be set to images for two-side scanning mode, one-side scanning mode, or the like, when the user operates the scan icon IC2. As shown in **Fig. 3****,** a drop box containing selections for the both-side scanning mode and the one-side scanning mode may be displayed in response to an operation of the scan icon IC2. One of the both-side scanning mode and the one-side scanning mode may be selected from the drop box. A secure scanning mode also may be selected from the drop box. In the secure scanning mode, data scanned by the first scanner device SD1 or the second scanner device SD2 may be transmitted to the central server CS and to the external server ES2 via secured transmission route. For example, when a medical document is scanned by the first scanner device SD1 or SD2, the secure scanning mode may be selected, and the scanned medical document data may be transmitted to the central server CS and to the external server ES2 via the secured transmission route. The secure transmission route may comprise Hypertext Transfer Protocol Secure (HTTPS) communication. Furthermore, scan parameter or the like, of scanned image data may be settable when operating the scan icon IC2. The scan parameter may comprise one or more types of scan tray, color mode, resolution, document size, and duplex scan. The type of scan tray may include flat bed scanner or auto document feeder. The color mode may include mono color scan or gray scale scan or color scan. The document size may include A4 size or Letter size or Legal size.

An operation command may be transmitted from the information processing device IP to the central server CS in response to an operation of the scan icon IC2, e.g., arrow (3) in **Fig. 2****.** The operation command may cause a scanner device utilizable by the information processing device IP to execute a scanning operation in response to the operation of the scan icon IC2. Before transmitting the operating command toward the central server CS, a login process to access the central server CS may be executed by the information processing device IP. A scanner device, to which the operation command is to be transmitted, may be selected in response to the operation of the scan icon IC2. The information processing device IP may utilize a plurality of devices in the network NW. By selecting the device to which the operation command is to be transmitted, the operation command may be transmitted to a scanner device desired by the user of the information processing device IP. In another embodiment, the device to which the operation command is to be transmitted may be automatically determined based on the logged-in user ID. The operation command may be transmitted automatically to the device determined based on the logged-in user ID. The operation command may comprise the scan parameter. The scan icon IC2 may be generated by the Hypertext Markup Language (HTML) inline frame code of the web page. When the user presses the scan icon IC2 on the external web page for the first time, an in-line frame may pop up requesting central server CS credentials.

In response to the selection of the device to which the operation command is to be transmitted by the information processing device IP, the operation command and device information may be transmitted, e.g., arrow (3) in **Fig. 2****.** The device information may indicate that the device to which the operation command is to be transmitted have been identified. When the device, to which the operation command is to be transmitted, is determined automatically, the operation command and the logged-in user ID may be transmitted to the central server CS, e.g., arrow (3) in **Fig. 2****.** In another embodiment, the operation command may be transmitted from the information processing device IP to the external server ES2 in response to an operation of the scan icon IC2. In response to receiving the operation command, the external server ES2 may transmit the operation command to the central server CS.

In response to receiving the operation command, the central server CS, in response to receiving the operation command, may determine the device based on the received device information. A shown in **Fig. 2****,** the first scanner device SD1 may be identified based on the received device information. The central server CS then may transmit the operation command to the identified first scanner device SD1, e.g., arrow (4) in **Fig. 2****.** When the device is determined automatically based on the user ID, the central server CS may identify the device based on the received user ID. As shown in **Fig. 2****,** the first scanner device SD1 may be identified based on the received user ID. The central server CS then may transmit an operation command to the identified first scanner device SD1, e.g., arrow (4) in **Fig. 2****.**

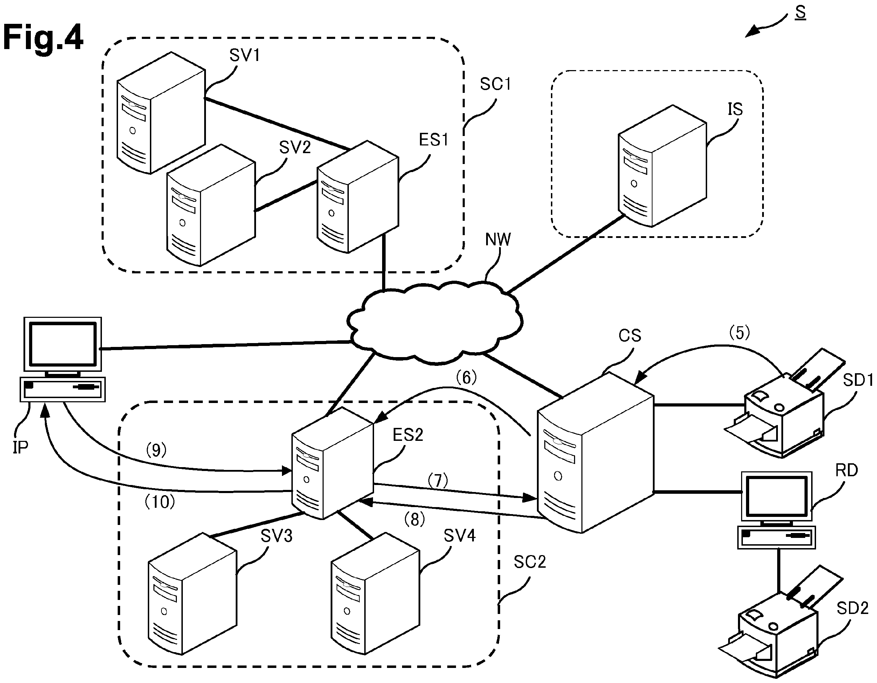

As shown in **Fig. 4****,** the first scanner device SD1, in response to receiving the operation command, may execute an image scanning process. The first scanner device SD1 may then upload the scanned image data to the central server CS, e.g., arrow (5) in **Fig. 4****.** When the second scanner device SD2 is identified, the operation command may be transmitted from the central server CS to the relay device RD. In response to receiving the operation command, the relay device RD may forward the operation command to the scanner device SC2, which is connected to the relay device RD. In response to receiving the operation command, the second scanner device SD2 may executes an image scanning process. The scanned image data may then be uploaded to the central server CS via the relay device RD. If a plurality of papers or documents is set on the first scanner device SD1 or the second scanner device SD2, the first scanner device SD1 or the second scanner device SD2 may scan image data for each paper or document. The first scanner device SD1 or the second scanner device SD2 may scan image data one page at a time. The scanned image data may be uploaded to the central server CS by the first scanner device SD1 or relay device RD one page at a time. After a plurality of papers or documents which is set on the first scanner device SD1 or the second scanner device SD2 has been scanned by the first scanner device SD1 or the second scanner device SD2, the scanned image data may be uploaded to the central server CS by the first scanner device SD1 or relay device RD. The central server CS may transmit the uploaded image data to the external server ES2 in response to receiving the uploaded image data from the first scanner device SD1 or relay device RD. The image data uploaded one page at a time may be integrated by the central server CS or the external server ES2.

When the image data is completely uploaded, the central server CS may transmit an upload completion command to the external server ES2, e.g., arrow (6) in **Fig. 4****.** In response to receiving the upload completion command, the external server ES2 may download the uploaded image data from the central server CS, e.g., arrow (7) in **Fig. 4****.** In the first embodiment, the external server ES2 may download the image data from the central server CS. When storage servers are included in the second network service SC2, the external server ES2 may transmit the downloaded image data to the third storage server SV3 or to fourth storage server SV4. In another embodiment, the central server CS may upload the image data to the external server ES2. The fourth storage server SV4 may download the image data uploaded from the central server CS. The downloaded image data may be stored in a predetermined storage area accessible using the logged-in user ID of the second network service SC2.

The information processing device IP may request the image data, which have become utilizable by the second network service SC2, using a web browser of information processing device IP, e.g., arrow (9) in **Fig. 4****.** In response to receiving the request for the image data, the external server ES2 may transmit the web page. The transmitted web page may cause the information processing device IP to access the image data stored in the external server ES2, third storage server SV3, or fourth storage server SV4. The information processing device IP may be the source of the request. The information processing device IP may download the image data from the external server ES2, third storage server SV3, or fourth storage server SV4, in which the requested image data are stored, e.g., arrow (10) in **Fig. 4****.**

The information processing device IP may remotely operate a scanner device via a web page provided by a network service. By commanding a scanning process on the web page, the information processing device IP may operate the scanner device to scan image data, and the scanned data may automatically be uploaded to a storage area of a network service usable by the information processing device IP.

### 3. Electrical Configuration of Central Server CS

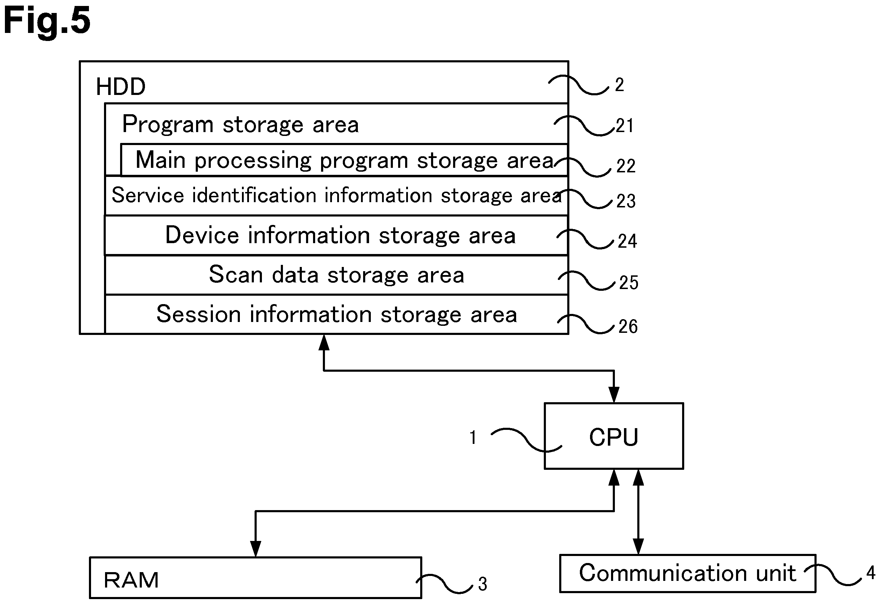

Referring to **Fig. 5****,** an electrical configuration of the central server CS is depicted. The central server CS may comprise a Central Processing Unit (CPU) 1, a Hard Disk Drive (HDD) 2, a Random Access Memory (RAM) RAM 3, and a communication unit 4. The CPU 1 may be electrically connected to each of the HDD 2, RAM 3, and communication unit 4. The CPU 1 and a storage device, e.g., the HDD 2 or RAM 3, may function as a computer of the central server CS. The HDD 2 may comprise a program storage area 21, a service identification information storage area 23, a device information storage area 24, a scan data storage area 25, and a session information storage area 26.

The program storage area 21 may comprise a main processing program storage area 22. The main processing program storage area 22 may store a program that carries out a main process of the central server CS. The program, for example, may be downloaded from a predetermined server in a network. The program may be recorded on a recording medium, such as a CD-ROM. The program may be read by a drive of the recording medium. The drive may be configured to be connectable of the central server CS.

The service identification information storage area 23 may store service identification information. The service identification information may indentify the first network service SC1, the second network service SC2, and the like. The service identification information may identify a network service provided via a network. The service identification information may identify a network service, the utilization of which is permitted by the central server CS.

The device information storage area 24 may store device information. The device information may identify a device, e.g., a scanner device, which is utilizable in the network system S. The device information may identify devices that are utilizable in the network system S, such as a scanner device, an image formation device, or a TV conference terminal that is connectable to a network. The user ID may be associated with the device information stored in the device information storage area 24. The user ID may be associated with one or more items of the device information. The information processing device IP may select a required device from among the plurality of devices associated with the user ID and may execute a scanning process. The device information may be associated with location information indicating the location of the device in the network. The location information may be stored in the device information storage area 24. The location information may comprise an IP address.

The scan data storage area 25 may store image data scanned by a scanner device. The scan data storage area 25 may store and associate the image data with the user ID. The external server ES1 or external server ES2 may acquire image data usable by a user in a network service based on the user's user ID. The scan data storage area 25 also may store and associate the image data with the service identification information.

The session information storage area 26 may store session information. The session information may identify a session between the central server CS and a scanner device. The session information may be information relating to a session between the central server CS and a device other than a scanner device that is connectable to a network. The session information may be information relating to a session between the central server CS and the relay device RD. The central server CS may store the session information between the central server CS and a scanner device or the relay device RD, such that the central server CS may transmit a scan command to the scanner device or relay device RD. The central server CS may store the session information, such that information may be transmitted and received between the central server CS and a scanner device or the relay device.

The RAM 3 may temporarily store information that is temporarily utilized by the central server CS. The communication unit 4 may execute communication with the information processing device IP, the first network service SC1, the second network service SC2, the first scanner device SD1, or the relay device RD, via the network NW.

### 4. Electrical Configuration of First scanner device SD1

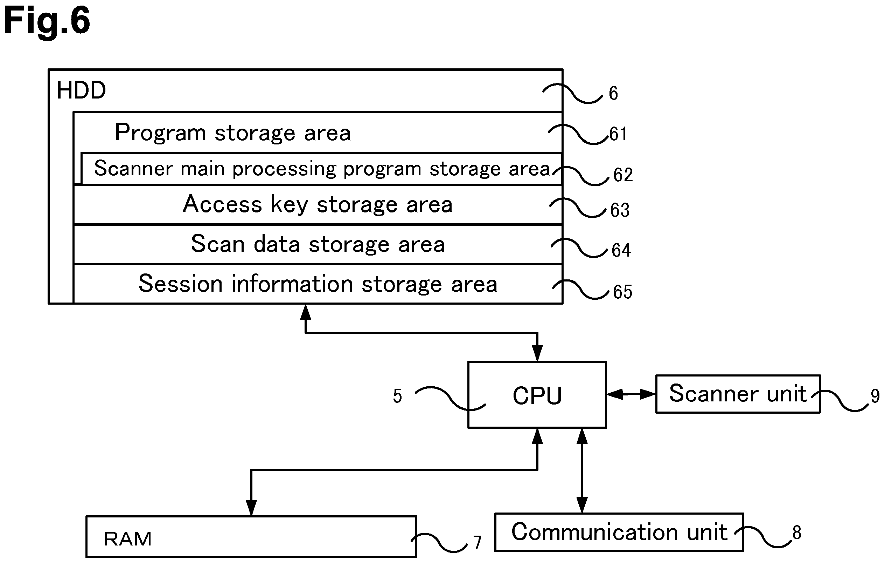

Referring to **Fig. 6****,** the first scanner device SD1 may comprise a CPU 5, a HDD 6, a RAM 7, a communication unit 8, and a scanner unit 9. The CPU 5 may be electrically connected to each of the HDD 6, RAM 7, communication unit 8, and scanner unit 9. The CPU 5 and a storage device, e.g., the HDD 6 or RAM 7, may function as a computer of the first scanner device SD1.

The HDD 6 may comprise a program storage area 61, an access key storage area 63, a scan data storage area 64, and a session information storage area 65.

The program storage area 61 may comprise a scanner main processing program storage area 62. The scanner main processing program storage area 62 may store a program for executing a main process of the first scanner device SD1. The program may be downloaded from a predetermined server in a network. The program may be recorded on a recording medium, e.g., a CD-ROM. The program may be read by a drive of the recording medium. The drive may be configured to connect to the scanner device or the relay device RD.

The access key storage area 63 may store an access key. An access key may indicate authentication information used when the first scanner device SD1 accesses the central server CS. The scan data storage area 64 may store image data scanned by the scanner unit 9.

The session information storage area 65 may store session information relating to a session between the central server CS and the scanner device. The first scanner device SD1 or central server CS may regularly carry out a session confirmation, and the session information may then be stored in the session information storage area 65. The first scanner device SD1 may store the session information, and the first scanner device SD1 may then receive a scan command transmitted from the central server CS.

The RAM 7 may temporarily store information that is temporarily utilized by the first scanner device SD1. The communication unit 8 may execute communication with the central server CS, the information processing device IP, the first network service SC1, the second network service SC2, or the relay device RD, via the network NW.

The scan unit 9 may be configured to scan a document set in the first scanner device SD1. Specifically, the scan unit 9 may comprise a conveyor roller, an image scanning sensor, and the like. The image scanning sensor may be an imaging element, e.g., a contact image sensor (CIS), a charge coupled device (CCD), or the like. The scan unit 9 may be driven and controlled by the CPU5 to scan the document to acquire the image data.

The electrical configuration of the relay device RD may be substantially similar to the electrical configuration of the first scanner device SD1. The relay device RD may not include the scan unit 9. The relay device RD may be configured to connect to the second scanner device SD2. The second scanner device SD2 may scan the document to obtain the scanned image data and transmit the scanned image data to the relay device RD. The relay device RD may store image data scanned by the second scanner device SD2 in the scan data storage area 64 of the relay device RD, and upload the image data to the central server CS.

### 5. Main Process of Central Server CS

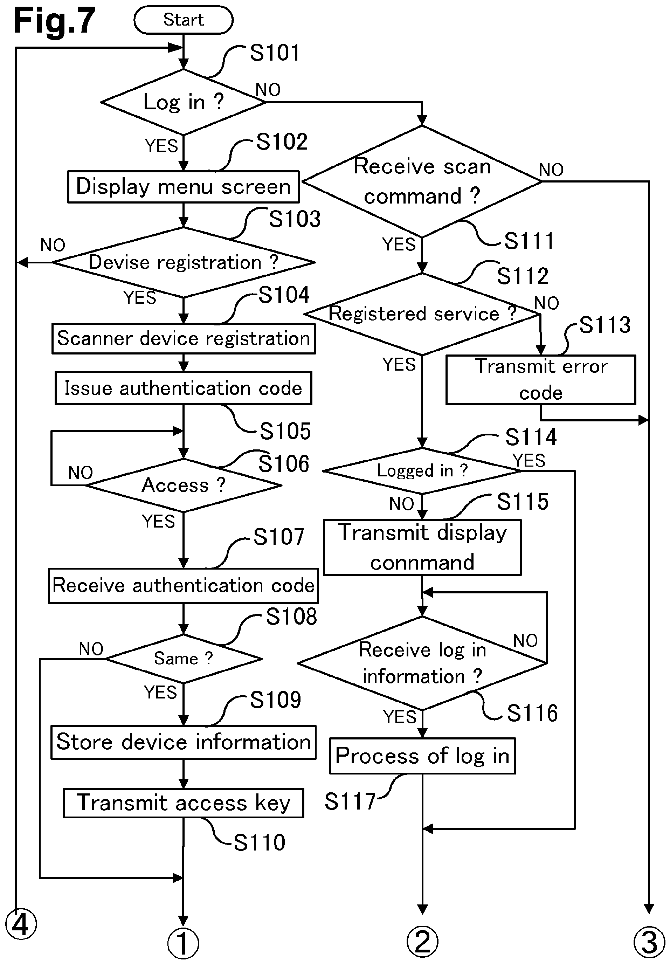

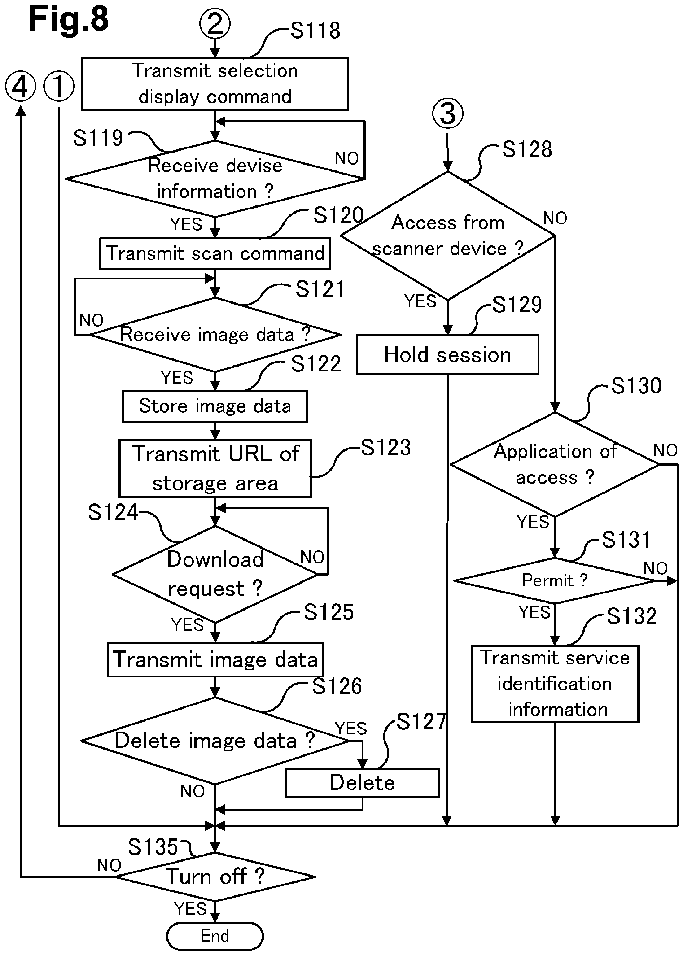

Referring to **Figs. 7** and **8****,** the process of the central server CS may be implemented when a power supply of the central server CS is turned on. Processes may be executed by the CPU 1.

In step S101, a process of logging in to a service utilized by the central server CS may be executed. Specifically, a login ID for logging in to the central server CS may be used. When the process of logging in is executed, e.g., YES at step S101, step S102 may be executed. When the process of logging in is not executed, e.g., NO in step S101, step Sill may be executed.

In step S102, a menu screen may be displayed. The menu utilizable by the central server CS may be displayed in a display unit of the information processing device IP. A browser installed in the information processing device IP may be used for displaying the menu of the network service.

In step S103, whether a device registration process has been selected from the menu screen may be determined. When the device registration process has been selected, e.g., YES in step S103, step S104 may be executed. If no device registration process has been selected, e.g., NO in step S103, step S101 may be executed. The device registration process in step S103 may be applicable to one or more of the information processing device IP, the first scanner device SD1, and the relay device RD.

In step S104, a scanner device registration process may be executed. The scanner device registration process may be a process of registering a device utilizable by the user who has logged in to the service in step S101. Device information given to the device registered in step S104 may be associated with the login ID, and may be stored in the device information storage area 24. The login ID may be the login ID used at the process of logging in to the service in of step S101. In another embodiment, the device information given to the registered device may be stored in the device information storage area 24, without associating with the login ID.

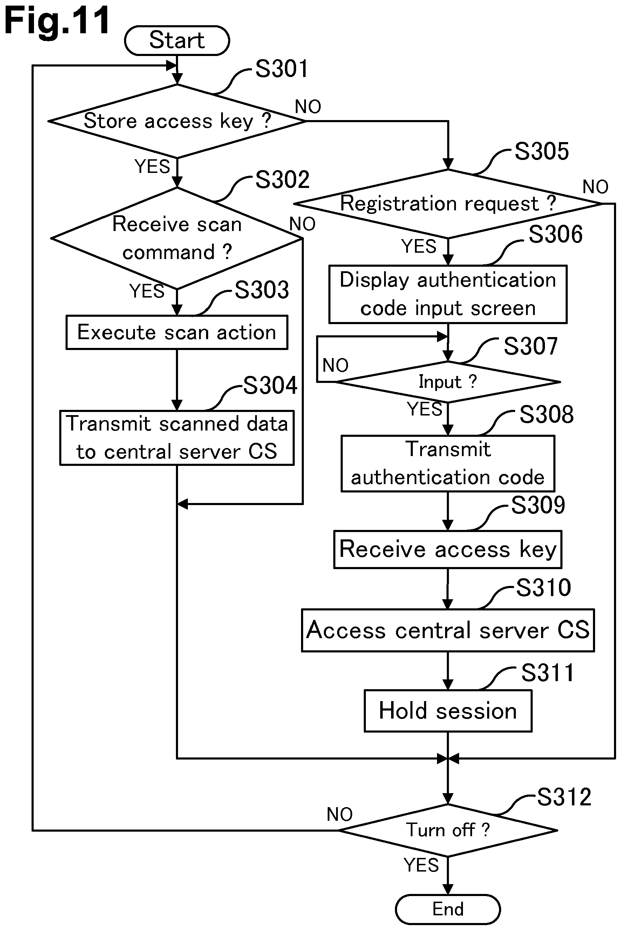

In step S105, an authentication code may be issued to the device that has applied for the registration process in step S103. An authentication code may be transmitted to the device that has applied for the registration process in step S103. The authentication code may be a code for executing an authentication of the first scanner device SD1 or relay device RD. The authentication code may be displayed in a display unit included in the information processing device IP or relay device RD. The authentication code also may be displayed in a display unit included in the first scanner device SD1. The authentication code issued in step S105 may be input in step S307, as shown in **Fig. 11****.**

In step S106, whether the central server CS has been accessed by the scanner device may be determined. When the central server CS has been accessed, e.g., YES in step S106, step S107 may be executed. If the central server CS has not been accessed, e.g., NO in step S106, step S106 may be executed again. When a predetermined period elapses after step S106 is executed again, the process may return to step S101.

In step S107, an authentication code may be received from the device which has been accessed in the step S106. If the central server CS has been accessed from the first scanner device SD1 in step S106, the authentication code transmitted in step S308 may be received in step S107.

In step S108, whether the authentication code is received in step S107 is the same as the authentication code issued in step S105 may be determined. If the authentication code received in step S107 and the authentication code issued in step S105 are the same, e.g., YES in step S108, step S109 may be executed. If the authentication code received in step S107 and the authentication code issued in step S105 are not the same, e.g., NO in step S108, step S135 may be executed.

In step S109, device information given to the authenticated device, a user ID utilized in the first network service SC1 or second network service SC2, and location information of the authenticated device may be associated and stored in the device information storage area 24. The location information may be information indicating a location in the network NW. The location information may be an IP address given to the authenticated device. In another embodiment, the device information given to the registered device may be stored in the device information storage area 24, without being associated with other information. The authenticated device may be the relay device RD connected to the first scanner device SD1 or second scanner device SD2. In step S109, the device information, service identification information of the first network service SC1 or second network service SC2, and location information may be associated and stored in the device information storage area 24.

In step S110, an access key may be transmitted to the registered device. The access key may be information for enabling a scanner device or the relay device RD to access the central server CS. The access key transmitted in step S110 may be received in step S309, as shown in **Fig. 11****.**

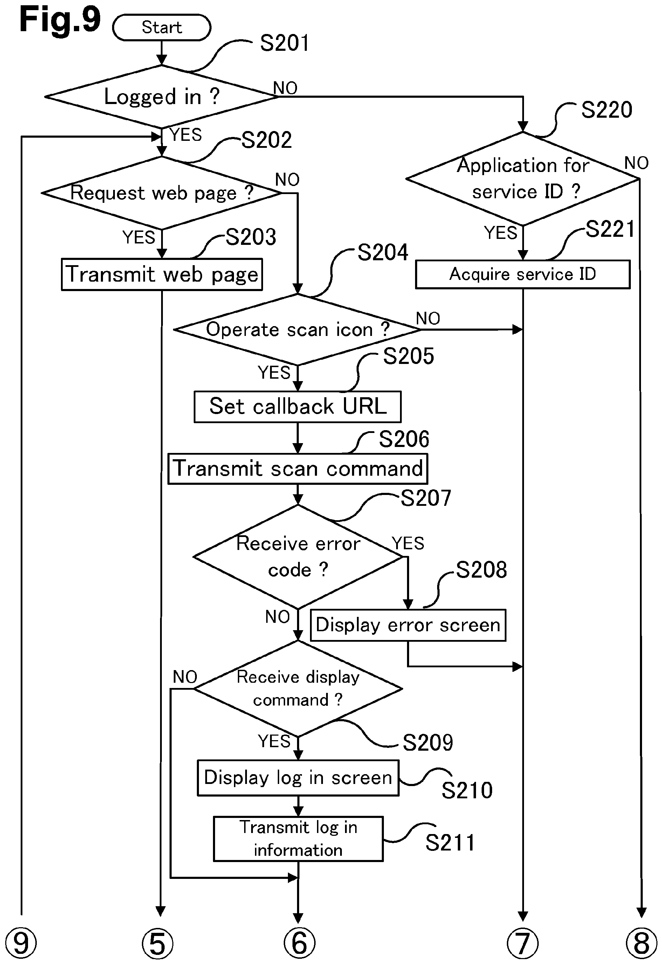

In step S111, whether a scan command has been received may be determined. The scan command may be a scan instruction application program interface (API) of the central server CS. If the scan command has been received, e.g., YES in step S111, step S112 may be executed. If no scan command has been received, e.g., NO at step S111, step S128 may be executed. The scan command received in step Sill may be transmitted in step S206, as shown in **Fig. 9****.** The scan command received in step Sill may comprise a uniform resource locator (URL) of the external server to notify the central server CS that the scanning of image data by the scanner device is completed. An IP address of the external server may be included in the scan command instead of the URL of the external server.

In step S112, whether a network service provided by the external server that has transmitted the scan command to the central server CS is a registered network service may be determined. Service identification information may be acquired from the external server that has transmitted the scan command to the central server CS. Whether the acquired service identification information is stored in the service identification information storage area 23 may then be determined. If the information is stored, the network service provided by the external server may be determined to be a registered network service. If it is determined that the information is not stored, the network service provided by the external server may be determined not to be a registered network service. If the network service provided by the external server is determined to be a registered network service, e.g., YES in step S112, step S114 may be executed. If the network service provided by the external server is not a registered network service, e.g., NO step S112, step S113 may be executed.

In step S113, an error code may be transmitted to the external server that has transmitted the scan command to the central server CS.

In step S114, whether the process of logging in to the central server CS is completed may be determined. If the logging in process is completed, e.g., YES in step S114, step S118 may be executed. If the logging in process is not completed, e.g., NO in step S114, step S115 may be executed.

In step S115, a display command for displaying a login screen on the display of the information processing device IP or relay device RD may be transmitted to the information processing device IP or relay device RD. Based on the display command, the log in screen may be displayed on a display unit of the information processing device IP or of the relay device RD.

In step S116, whether the login information has been received may be determined. If the login information has been received, e.g., YES in step S116, step S117 may be executed. If no login information has been received, e.g., NO in step S116, step S116 may be executed again. The login information may comprise a login ID for logging in to the central server CS and a password. When a predetermined period elapses after step S116 is repeated, the process may return to step S101.

] In step S117, a process of logging in may be executed based on the login information received in step S116.

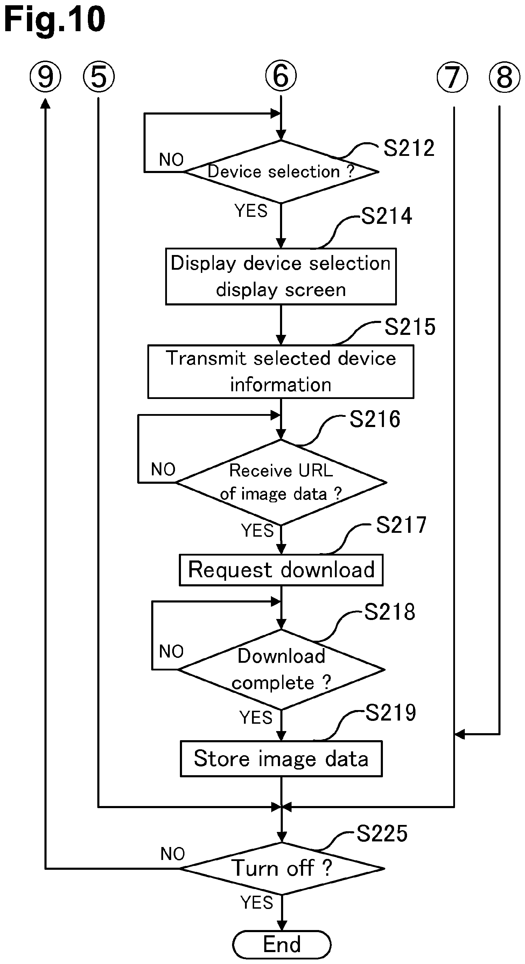

In step S118, a selection display command may be transmitted to the information processing device IP or relay device RD. The selection display command may be a command that instructs a information processing device IP or scanner device to display a screen for selecting a device, e.g., a scanner device, connected to the network NW. Based on the selection display command, the screen for selecting a device may be displayed in a display unit of the information processing device IP or of the relay device RD. Specifically, a user ID, login ID, or service identification information of a network service utilized by the information processing device IP or relay device RD may be acquired from the information processing device IP, an external server, or the relay device RD. If the user ID, the login ID, or the service identification information is stored in the central server CS, the user ID, the log in ID, or the service identification information may not be acquired from the information processing device IP, an external server, or the relay device RD. The device information associated with the acquired user ID, log in ID, or service identification information may be determined from the device information storage area 24. The selection display command instructing information processing device IP or the relay device RD or external server to display the determined device information for selection may be transmitted to the information processing device IP, relay device RD, or external server. The selection display command may be transmitted to an external server. The transmitted selection display command may be received in step S212, as shown in **Fig. 10****.**

In step S119, whether the device information has been received may be determined. Whether the device information transmitted in step S215 of **Fig. 10** has been received may be determined. If the device information has been received, e.g., YES in step S119, step S120 may be executed. If the device information has not been received, e.g., NO in step S119, step S119 may be executed again. When a predetermined period elapses after step S119 is repeated, the process may return to step S101.

In step S120, the scan command may be transmitted to the device indicated by the device information received in step S119. Specifically, the location information associated with the device information received in step S119 may be determined from the device information storage area 24. The scan command may be transmitted based on the determined location information. The scan command transmitted in step S120 may be received in step S302 of **Fig. 11****.**

In step S121, whether image data have been received may be determined. Specifically, whether image data uploaded by the scanner device have been received may be determined. If the image data have been received, e.g., YES in step S121, step S122 may be executed. If no image data have been received, e.g., NO in step S121, step S121 may be executed again. When a predetermined period elapses after step S121 is repeated, the process may return to step S101. The image data received in step S121 may be image data transmitted in step S304 of **Fig. 11****.**

In step S122, the image data received in step S121 may be stored in the scan data storage area 25. The received image data may be associated with the user ID, service identification information, or login ID of the network service utilized by the information processing device IP and stored in the scan data storage area 25.

In step S123, a URL of the storage area, in which the image data are stored, may be transmitted toward the URL received in step S111. The URL of the storage area may be information indicating a storage destination of the scan data storage area 25 in which the image data are stored. The URL transmitted in step S123 may be received in step S216, as shown in **Fig. 10****.**

In step S124, whether a download request is received for the URL transmitted in step S123 may be determined. If the download request is received, e.g., YES in step S124, step S125 may be executed. If the download request is not received, e.g., NO in step S124, step S124 may be executed again. When a predetermined period elapses after step S124 is repeated, the process may return to step S101. The download request received in step S124 may be a request generated in step S217, as shown in **Fig. 10****.**

In step S125, in response to requesting download in the step S124, image data may be transmitted to the request source external server or storage server. The transmitted image data may be received in step S218, as shown in **Fig. 10****.**

In step S126, whether the network service is a service that deletes image data may be determined. Specifically, the service identification information indicating the network service, to which the download request source external server or storage server belongs, may be acquired from the request source external server or the storage server. The service identification information acquired in step S112 may be used. A "deletable" flag corresponding to the service identification information may be stored in the service identification information storage area 23. The "deletable" flag may indicate whether the network service is a service that deletes image data. The "deletable" flag may be stored in the service identification information storage area 23, in response to executing step S132. Thus, based on the acquired service identification information and "deletable" flag, whether the network service is a service that deletes image data may be determined. If the network service is a service that deletes image data, e.g., YES in step S126, step S127 may be executed. If the network service is not a service that deletes image data, e.g., NO in step S126, step S135 may be executed.

In step S127, the image data determined to be deleted in step S126 may be deleted from the scan data storage area 25.

In step S128, whether the central server CS has been accessed by the scanner device may be determined. If the central server CS has been accessed by the scanner device, e.g., YES in step S128, step S129 may be executed. If the central server CS has not been accessed by a scanner device, e.g., NO in step S128, step S130 may be executed. The access received in step S128 may be an access executed in step S310, as shown in **Fig. 11****.**

In step S129, a session between the scanner device accessed in the step S128 and the central server CS may be held. Specifically, information relating to a session between the scanner device accessed in step S128 and the central server CS may be stored in the session information storage area 26.

In step S130, whether a network service has applied to access the central server CS may be determined. The application for access may be an application in which the external server of the external network service obtains permission to utilize the central server CS. If access has been applied for the central server CS, e.g., YES in step S130, step S131 may be executed. If no access has been applied for the central server CS, e.g., NO in step S130, step S135 may be executed.

In step S131, whether the utilization of the central server CS by the network service requested in the step S 130 is permitted may be determined. If the utilization of the central server CS is permitted, e.g., YES in step S131, step S132 may be executed. If the utilization of the central server CS is not permitted, e.g., NO in step S131, step S135 may be executed.

In step S132, the service identification information may be given to the network service to which utilization has been permitted in step S131. Then, the given service identification information may be stored in the service identification information storage area 23. The given service identification information may be transmitted to the network service that has made the application in step S130.

In step S135, whether the power supply of the central server CS or a program of the central server CS has been turned off may be determined. If the power supply has been turned off, e.g., YES in step S135, the main action process may end. If the power supply has not been turned off, e.g., NO in step S135, step S101 may be executed.

### 6. Main Process of External Server ES1 or External Server ES2

Referring to **Figs. 9** and **10****,** the process of the external server ES1 or the external server ES2 may be implemented when a power supply of the external server ES1 or external server ES2 is turned on. Processes may be executed by the CPU of the external server ES1 or of the external server ES2.

In step S201, whether a user has logged in to the first network service SC1 provided by the external server ES1 may be determined. Specifically, a logging in process may be executed using a web page provided by the external server ES1 and a user ID. If a user has logged in to the first network service SC1 provided by the external server ES1, e.g., YES in step S201, step S202 may be executed. If no user has logged in to the first network service SC1 provided by the external server ES1, e.g., NO in step S201, step S220 is executed.

In step S202, whether a web page has been requested may be determined. If a web page has been requested, e.g., YES in step S202, step S203 may be executed. If a web page has not been requested, e.g., NO in step S202, step S204 may be executed.

In step S203, the web page on which the scan icon IC2 is displayed, as shown in **Fig. 3****,** may be transmitted to the web page request source of step S202.

In step S204, whether the scan icon IC2, as shown in **Fig. 3****,** has been operated may be determined. If the scan icon IC2 has been operated, e.g., YES in step S204, step S205 may be executed. If the scan icon IC2 has not been operated, e.g., NO in step S204, step S225 may be executed. In step S204, a both-side scanning mode, one-side scanning mode, or the like, of a document may be set, in response to operating the scan icon IC2. A drop box may be displayed in accordance with an operation of the scan icon IC2, from which a both-side scanning more or one-side scanning mode may be selected,.

In step S205, a callback URL may be set. The callback URL may indicate a notification destination, to which a notification indicating that image data have been scanned and uploaded may be sent. The callback URL may indicate the location of the external server ES1.

In step S206, a scan command and the callback URL may be transmitted to the central server CS. The scan command transmitted in step S206 may be a command in accordance with the setting operation in step S204. When, as shown in **Fig. 3****,** the one-side scanning mode is selected as a scan command, the scan command indicating a one-side scanning mode may be transmitted. When, as shown in **Fig. 3****,** the both-side scanning mode is selected as a scan command, the scan command indicating a both-side scanning mode may be transmitted.

In step S207, whether an error code has been received may be determined. The error code may indicate that the information transmitted in step S206 is not permitted by the central server CS due to certain error. If an error code has been received, e.g., YES in step S207, step S208 may be executed. If no error code has been received, e.g., NO in step S207, step S209 may be executed. The error code received in step S207 may be an error code transmitted in step S113, as shown in **Fig. 7****.**

In step S208, an error screen may be displayed. Specifically, a web page representing an error screen may be transmitted from the external server ES1 to the information processing device IP or to the relay device RD.

In step S209, whether a display command has been received from the central server CS may be determined. The display command received in step S209 may be the login screen display command transmitted in step S115, as shown in **Fig. 7****.** The login screen display command may be a command instructing a display of the request source of the scan command to show a login screen. The login screen may allow the user of the information processing device IP to log in to the central server CS. Thus, the external server ES1 may cause the information processing device IP to display a login screen, and cause the information processing device IP to execute logging in process using a log in ID. If a display command has been received, e.g., YES in step S209, step S210 may be executed. If no display command has been received, e.g., NO in step S209, step S212 may be executed.

In step S210, a login screen may be displayed in the information processing device IP or in the relay device RD. Specifically, a web page representing a login screen may be transmitted from the external server ES1 to the information processing device IP orto the relay device RD. Login information for logging in may then be acquired from the information processing device IP or from the relay device RD. The login information may be a combination of a login ID and a password, or the like.

In step S211, the login information acquired in step S210 may be transmitted to the central server CS.

In step S212, whether the device selection screen display command transmitted in step S118 has been received may be determined. If the device selection screen display command has been received, e.g., YES in step S212, step S214 may be executed. If the device selection screen display command has not been received, e.g., NO in step S212, step S212 may be executed again. When a predetermined period elapses after step S212 is repeated, the process may return to step S202.

In step S214, a device selection display screen may be displayed. The external server ES1 may cause the information processing device IP or the relay device RD to display the device selection display screen, and cause the information processing device IP or the relay device RD to select information regarding the device to which a scan command is to be transmitted.

In step S215, the device information selected in step S214 may be transmitted to the central server CS.

In step S216, whether a URL of image data has been received may be determined. The URL received in step S216 may be the URL transmitted in step S123, as shown in **Fig. 8****.** The URL of image data may indicate a store destination of the scanned image data by a scanner device. If the URL of image data has been received, e.g., YES in step S216, step S217 may be executed. If the URL of image data has not been received, e.g., NO in step S216, step S216 may be executed again. When a predetermined period elapses after step S216 is repeated, the process may return to step S202.

In step S217, a download of the image data may be requested. The download request may be transmitted to a destination indicated by the URL received in step S216.

In step S218, whether the download of image data requested in step S217 is completed may be determined. Image data downloaded in step S218 may be the image data transmitted in step S125, as shown in **Fig. 8****.** If the download is completed, e.g., YES in step S218, step S219 may be executed. If the download is not completed, e.g., NO in step S218, step S218 may be executed again. When a predetermined period elapses after step S218 is repeated, the process may return to step S202.

In step S219, the downloaded image data may be stored in the external server ES1. The image data stored in the external server ES1 may be forwarded to the first storage server SV1 or second storage server SV1. The processes of steps S216 to S219 may be executed by one or more of the storage servers SV1 to SV4 of the first network service SC1 or the second network service SC2.

In step S220, whether an application for a service ID has been made to the central server CS may be determined. If an application has been made, e.g., YES in step S220, step S221 may be executed. If application has not been made, e.g., NO in step S220, step S225 may be executed.

In step S221, the service ID applied for in step S220 may be acquired. Specifically, the service identification information transmitted in step S132, as shown in **Fig. 8****,** may be acquired. The service ID acquired from the central server CS may then be stored in the external server ES1.

In step S225, whether the power supply of the external server ES1 or a program of the external server ES1 has been turned off may be determined. If the power supply has been turned off, e.g., YES in step S225, the main process of the external server ES1 may end. If the power supply has not been turned off, e.g., NO in step S225, step S202 may be executed. When a logging out process has been executed, the process may return to step S201.

### 7. Main Process of First scanner device SD1 or Relay Device RD

Referring to **Fig. 11****,** the main process of the first scanner device SD1 or of the relay device RD may be implemented when a power supply of the first scanner device SD1 or of the relay device RD is turned on. Processes may be executed by the CPU 5 of the first scanner device SD1 or of the relay device RD.

In step S301, whether an access key is stored in the access key storage area 63 may be determined. If an access key is stored, e.g., YES in step S301, step S302 may be executed. If no access key is stored, e.g., NO in step S301, step S305 may be executed.

In step S302, whether the scan command has been received may be determined. The scan command received in step S302 may be the scan command transmitted in step S120 of the central server CS. If the scan command has been received, e.g., YES in step S302, step S303 may be executed. If scan command has not been received, e.g., NO in step S302, step S312 may be executed.

In step S303, a scanning action may be executed. Specifically, the scanner unit 9 may be driven based on the scan command received in step S302. In accordance with the scan command, image data may be scanned from a document conveyed in a scanner device. The scanned image data may be stored in the scan data storage area 64. In the relay device RD, the scan command received in step S302 may be forwarded to the second scanner device SD2, which is connected to the relay device RD. The second scanner device SD2, to which the scan command has been forwarded, may then execute a scanning action to obtain image data from a document. The relay device RD may acquire the image data from the second scanner device SD2. The acquired image data may be stored in the scan data storage area 64 of the relay device RD.

In step S304, the image data scanned in step S303 or the image data acquired in step S303 may be transmitted, , e.g., uploaded, to the central server CS.

In step S305, whether a scanner device registration has been requested from a user using the first scanner device SD1 or the relay device RD may be determined. A registration request may be a process of registering the first scanner device SD1 or the second scanner device SD2, such that the registered device is utilizable in the network system S. If the scanner registration has been requested, e.g., YES in step S305, step S306 may be executed. If the scanner registration has not been requested, e.g., NO in step S305, step S312 may be executed.

In step S306, an authentication code input screen is displayed. The authentication code input screen represents a screen allowing users to input authentication code. Specifically, the authentication code input screen is displayed on a display comprised in the first scanner device SD1 or on a display of the relay device RD.

In step S307, whether the authentication code has been input may be determined. If the authentication code has been input, e.g., YES in step S307, step S308 may be executed. If the authentication code has not been input, e.g., NO in step S307, step S307 may be executed again. When a predetermined period elapses after step S307 is repeated, the process may return to step S301. The authentication code input in step S307 may be the authentication code issued in step S105, as shown in **Fig. 7****.**

In step S308, the authentication code input in step S307 may be transmitted to the central server CS.

In step S309, the access key transmitted by the central server CS in step S110 may be received. The received access key may then be stored in the access key storage area 63.

In step S310, access of the central server CS may be started based on the access key received in step S309.

In step S311, a session between the central server CS accessed in step S310, and the first scanner device SD1 or relay device RD may be held. Specifically, information relating to a session between the central server CS accessed in step S310, and the first scanner device SD1 or relay device RD may be stored in the session information storage area 65.

In step S312, whether the power supply of the first scanner device SD1 or relay device RD has been turned off may be determined. If the power supply has been turned off, e.g., YES in step S312, the main process of the first scanner device SD1 or relay device RD may end. If the power supply has not been turned off, e.g., NO in step S312, step S301 may be executed.

### Second Embodiment

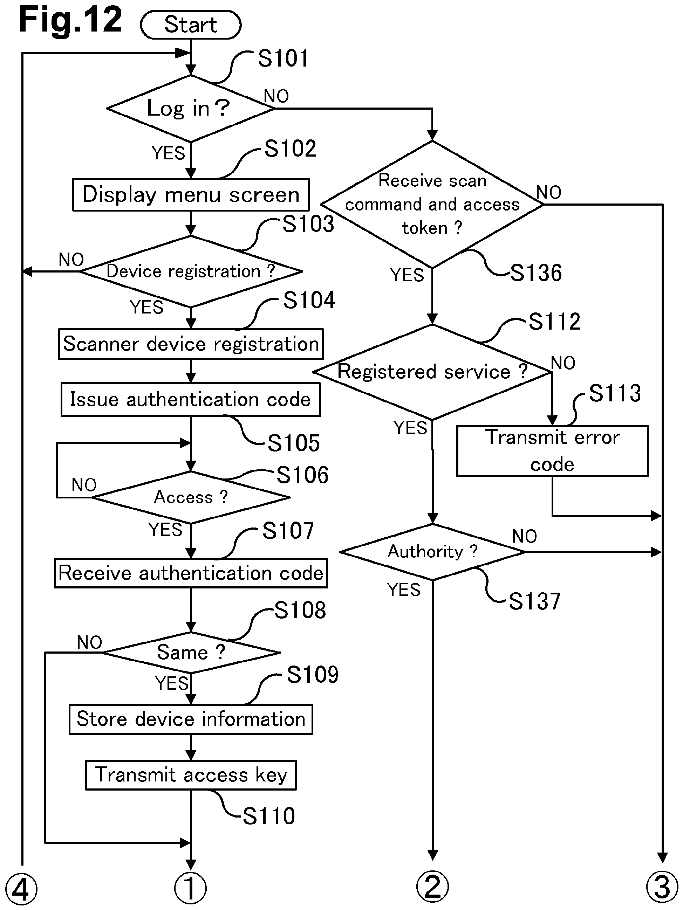

Referring to **Figs. 12-15****,** in the second embodiment, the central server CS logging in process of steps S114 to S117, as shown in **Fig. 7****,** may be omitted.

As shown in **Fig. 12****,** in contrast to step S111 in **Fig. 7****,** in step S136, whether a scan command and an access token have been received may be determined. The access token may be information indicating authority to use the central server CS. If the scan command and the access token have been received, e.g., YES in step S136, step S112 may be executed. If the scan command and access token have not been received, e.g., NO in step S136, step S128 may be executed.

If the network service is determined to be a registered service in step S112, step S137 may be executed instead of steps S114 to S117 in **Fig. 7** of the first embodiment. In step S137, the authority to utilize the central server CS may be determined based on the access token received in step S136. Specifically, whether the access token received in step S136 is registered in an access token database stored in a predetermined storage area of the HDD 2 may be determined. If the access token is registered, the received access token may be determined to have authority. If the access token is not registered, the received access token may be determined not to have authority. If received access token is determined to have authority, e.g., YES in step S137, step S118 may be executed. If the received access token is determined not to have authority, e.g., NO in step S137, step S128 may be executed.

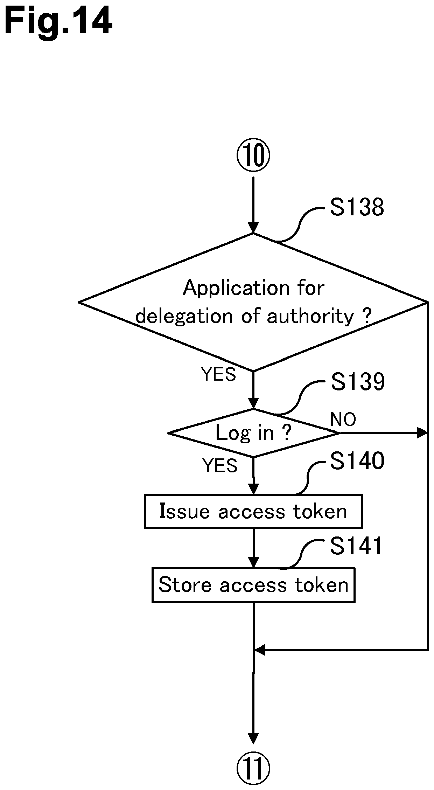

As shown in **Fig. 14****,** in step S138, whether an application for delegation of authority is requested may be determined. If the application for delegation of authority has been requested, e.g., YES in step S138, step S139 may be executed. If the application for delegation of authority has not been requested, e.g., NO in step S138, step S135 may be executed.

As shown in **Fig. 14****,** in step S139, whether login process has been executed may be determined. If the login process is successful, e.g., YES in step S139, step S140 may be executed. If the login process failed, e.g., NO in step S139, step S135 may be executed.

Also, as shown in **Fig. 14****,** an access token may be issued in step S140. The issued access token may be transmitted to the application requester of step S138.

In step S141, the login ID for logging in to the access in step S101, the access token issued in step S140, and the service ID of application source in the step S138 may be associated with each other, and may be registered in the access token database of the HDD 2.

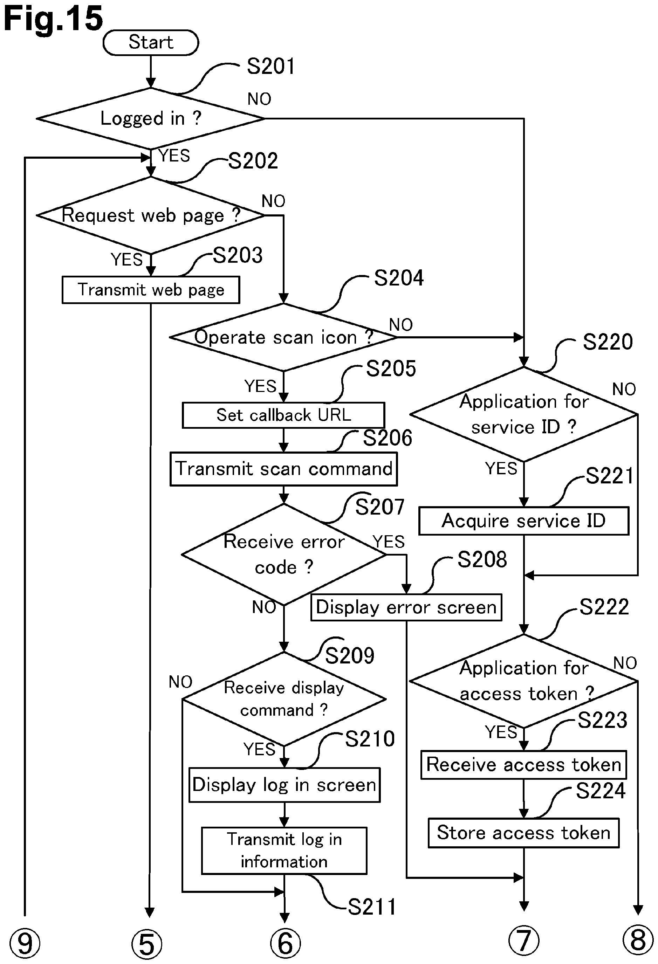

As shown in **Fig. 15****,** in step S222, whether application for access token is requested may be determined. If the application for access token has been requested, e.g., YES in step S222, step S223 may be executed. If the application for access token has not been requested, e.g., NO in step S222, step S225 may be executed.

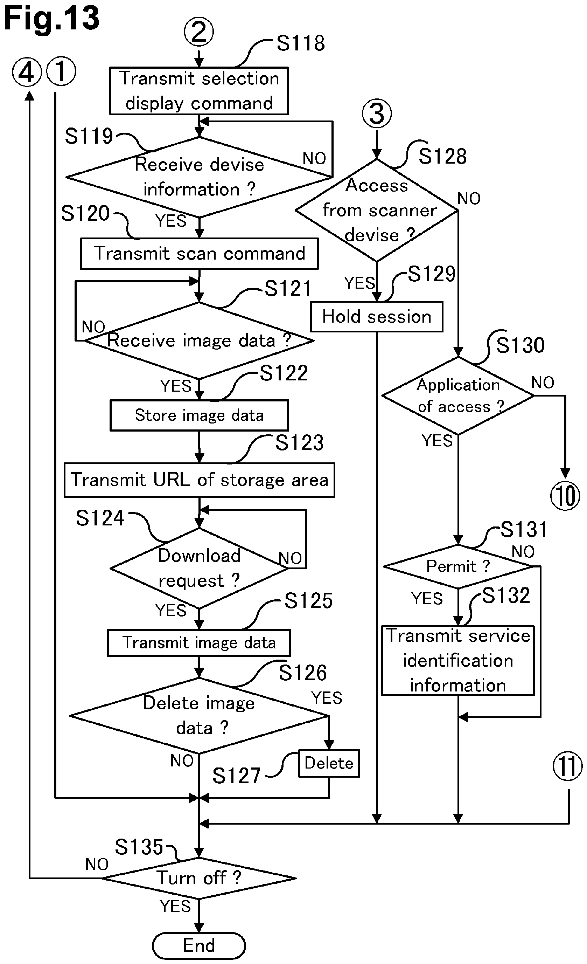

In step S223, an access token may be received, based on the service ID application approved by the central server CS. The access token received in step S223 may be the access token transmitted in step S140 of **Fig. 13****.** In step S224, the access token received in step S223, the log in ID used when logging in in step S101, and the service ID of the external server ES1 may be associated with each other and saved in a predetermined storage area of the external server ES1. The access token saved in step S224 may be transmitted together with the scan command to the central server CS in step S206. The scan command and access token then may be received in step S136 of **Fig. 12****.** Thus, the service of the central server CS may be utilized, without executing a logging in process.

The external servers ES1 and ES2, or of the storage servers SV1 to SV4, may be storage devices that are utilized with a web page. In another embodiment, the storage devices may be utilized with a network service that manages a web page.

Image data uploaded to the central server CS may be downloaded by the external servers ES1 and ES2 or by the storage servers SV1 to SV4. In another embodiment, uploaded image data may be transmitted by the central server CS to the external servers ES1 and ES2 or to the storage servers SV1 to SV4

In step S120, the scan command may be transmitted to the device indicated by the device information received in step S119. Specifically, the application program interface (API) of the scanner device may be called as the scan command. In another embodiment, only a signal indicating a scan command, rather than the API call, may be transmitted to the device indicated by the device information received in step S119. When the signal indicates that the scan command is received by the scanner device, the scanner device software may start up, and the scan command may be executed.

The device to which the scan command is to be transmitted may be selected by the processes of steps S118 to S120, as shown in **Fig. 8****,** and the processes of steps S214 and S215, as shown in **Fig. 10****.** The device to which the scan command is to be transmitted may be determined automatically. Specifically, the device information given to the device registered in step S104 and the user ID or service identification information utilized with the first network service SC1 or second network service SC2 are associated with each other, and stored in the device information storage area 24. Thus, a plurality of items of device information may be registered with respect to one user ID or item of service identification information, because a plurality of scanner devices may be connected to a network, and the user may utilize the plurality of scanner devices. In step S104, the login ID of the central server CS and the device information given to the device registered may be associated, and stored in the device information storage area 24. Thus, a plurality of items of device information may be registered with respect to one login ID.

When a plurality of items of device information are registered with respect to one user ID or log in ID, the device to which the scan command is to be sent may be automatically determined from among the plurality of items of device information, instead of based on the selection display command transmitted in step S118. Specifically, the device to which the scan command is to be sent may be automatically determined from among the plurality of items of device information, based on the service identification information acquired in step S112. The service identification information of each network service and the device information to be used may be associated with each other, and stored on the HDD 2. Because the device information associated with the service identification information is uniquely determined from among the plurality of items of device information, the device information may be automatically determined.

In step S112, the user ID used when logging in to the network service may be acquired. The device, to which the scan command is to be sent, may be automatically determined from among the plurality of items of device information, based on the user ID acquired in step S112, because the user ID may be associated with the device information used by the user, and stored on the HDD 2. Thus, the device information associated with the user ID may be identified from among the plurality of items of device information, and the device information may be automatically determined. When a plurality of items of device information are registered with respect to one user ID, login ID, or item of service identification information, device information may indicate the device in which a document is set for scanning. The device, in which the document is set, may be determined as the device to which the scan command is transmitted. A document detecting sensor may be installed in a scanner device, image formation device, and the like. When the scanner device or image formation device determines, using the document detecting sensor, that a document is set, the scanner device or image formation device may notify the central server CS that a document is set. Thus, the central server CS may identify the scanner device or image formation device in which the document is set, from among the plurality of items of device information, as the device to which the scan command is to be transmitted.

One or more items of device information may be associated with a combination of service identification information and user ID, and may be stored on the HDD 2. The device, to which the scan command is sent, may be automatically determined from among the plurality of items of device information, based on the service identification information acquired in step S112 and the user ID. Thus, when the device information associated with the combination of service identification information and the user ID is identified from among the plurality of items of device information, the device information may be automatically determined.

In the first embodiment, the logging in process may use the user ID utilized with the network service CS1 or network service CS2 and the log in ID utilized with the central server CS. In the second embodiment, the logging in process may utilize an access token. When an access token is not used, the user ID and log in ID may be associated and stored in the central server CS and the user ID may be acquired in step S112. Thus, instead of executing a logging in process in steps S115 to S117 of the first embodiment, the central server CS may execute a logging in process automatically using the login ID acquired in step S112 associated and stored with the user ID.

Image data may be uploaded to a storage device of the first network service SC1 or second network service SC2 by the first scanner device SD1 or second scanner device SD2 operated by the user of the first network service SC1 or the second network service SC2. In another embodiment, a video imaging device may be used instead of the first scanner device SD1 or second scanner device SD2. A video imaging device may be a digital camera, a TV conference terminal, or the like. A device configured to acquire or generate still image data or video data may be used instead of the first scanner device SD1 or the second scanner device SD2.

While the invention has been described connection with various exemplary structures and illustrative embodiments, it will be understood by those skilled in the art that other variations and modifications of the structures and the embodiments describes above may be made without departing from the scope of the invention. Other structures and embodiments will be apparent to those skilled in the art from the descriptions of the specification, including the accompanying figures, or from practice of the invention disclosed herein. It is intended that the specification and described examples are illustrative with the true scope of the invention being defined by the following claims.

## Claims

1. A network system (S) including a service providing network device (ES1, ES2), an information processing device (IP), and a data server (CS); wherein:
the data server (CS) is configured to be connectable to an image scanning device (SD1, SD2) via a network (NW);
the service providing device (ES1, ES2) is configured to transmit a web page to the information processing device (S203), the web page comprising operating information for transmitting a command to the data server (CS), the command being for causing an image scanning device (SD1, SD2) to execute a scanning operation and comprising location information indicating a location, in the network, of the service providing device (ES1, ES2);
the service providing device (ES1, ES2) is operated by the information processing device (IP) via the web page transmitted from the service providing device (ES1, ES2); and
the data server comprises:
a processor (1) having computer readable instruction stored thereon and configured to control the data server (CS) to execute steps of:
receiving the command from the service providing device (ES1, ES2), based on operation of operating information in the web page,
determining an image scanning device (SD1, SD2) to which an operation signal for executing an image scanning process is transmitted in response to receiving the command;
transmitting the operation signal to the determined image scanning device (SD1, SD2) via the network (NW) to cause the determined image scanning device (SD1, SD2) to execute an image scanning process;
storing scanned data obtained from the image scanning process of the determined image scanning device (SD1, SD2) in a memory at the data server (2); and
transmitting, to the service providing device (ES1, ES2) indicated by the location information, the scanned data stored in the memory (2).

2. The network system according to claim 1,
wherein the data server (CS) is connected to a plurality of image scanning devices (SD1, SD2) via the network, and
wherein the processor (1) is further configured to control the data server (CS) to execute steps of:
acquiring user identification information identifying a user operating the operation information in the web page;
storing the user identification information in the memory (2) and associating the user identification information with device identification information that identifies one of the plurality of image scanning devices (SD1, SD2) corresponding to the user identification information;
determining the device identification information corresponding to the acquired user identification information in the memory (2); and
transmitting the operation signal to the image scanning device (SD1, SD2) indicated by the determined device identification information.

3. The network system according to either one of claim 1 and claim 2, wherein the step of determining the device identification information comprises the step of determining the image scanning device (SD1, SD2), for which operating information of the web page instructs to execute a scanning process, from the plurality of the image scanning devices (SD1, SD2).

4. The network system according to claim 2,
wherein the processor (1) is further configured to control the data server (CS) to execute steps of:
acquiring service identification information that identifies a service providing device (ES1, ES2) being configured to provide the web page on which the operation information is displayed;
storing the service identification information and associating the service identification information with the user identification information and the device identification information;
determining the device identification information associated with the acquired user identification information and the acquired service identification information; and
transmitting the operation signal to the image scanning device indicated by the determined device identification information.

5. The network system according to any one of claim 1 to 4,
wherein the processor (1) is further configured to control the data server (CS) to execute steps of:
generating the operation signal indicating one of a one-side scanning mode and a both-side scanning mode based on the operation of the operation information in the web page;
determining the image scanning device (SD1, SD2) to which the operation signal is to be transmitted; and
transmitting the operation signal indicating one of the one-side scanning mode and the both-side scanning mode to the determined image scan device.

6. The network system according to any one of claim 1 to 5,
wherein the processor (1) is further configured to control the data server (CS) to execute steps of:
determining whether the acquired location information indicates a service providing device (ES1,ES2) authorized to access the data server (CS);
permitting access of the service providing device and execution of the determining step for determining the image scanning device (SD1, SD2) to which the operation signal and the transmission step for transmitting the operation signal to the determined image scanning device via the network, when the acquired location information indicates a service providing device (ES1, ES2) authorized to access the data server; and
restricting access of the service providing device (ES1, ES2) and execution of the determining step for determining the image scanning device (SD1, SD2) to which the operation signal and the transmission step for transmitting the operation signal to the determined image scanning device via the network, when the acquired location information indicates a service providing device (ES1 ,ES2) not authorized to access the data server.

7. The network system according to any one of claim 1 to 6,
wherein the processor (1) is further configured to control the data server (CS) to execute steps of:
acquiring service identification information identifying a service providing device (ES1, ES2) being configured to provide the web page on which the operation information is displayed; and
deleting the scanned data stored in the memory (2) after the service providing device acquires the scanned data stored in the memory, when the acquired service identification information indicates that the service providing device does not permit data saving.

8. The network system according to any one of claim 1 to 7, wherein the data server is connected to an image scanning device (SD1, SD2) configured to scan at least one paper set on the image scanning device.

9. The network system (S) according to any preceding claim including an image scanning device (SD1, SD2) configured to scan an image,
wherein the image scanning device comprises:
a second processor (5) having computer readable instructions stored thereon and configured to control the image scanning device to execute steps of:
receiving the operation signal;
executing the scanning process in response to receiving the operation signal; and
uploading the scanned data to the data server or the service providing device.

10. An upload method for a network system (S) including a service providing device (ES1, ES2), a data server (CS), an image scanning device (SD1, SD2) configured to scan an image, and a managing device (IP) that is configured to receive a web page, the upload method comprising the steps of:
transmitting from the service providing device (ES1, ES2) to the managing device (S203), a web page comprising operating information for transmitting a command to the data server (CS), the command being for causing an image scanning device (SD1, SD2) to execute a scanning operation and comprising location information indicating a location, in the network system, of the service providing device (ES1, ES2);
operating the service providing device (ES1, ES2) by the managing device (IP) via the web page;
receiving with the data server (CS) the command from the service providing device, based on operation of operating information in the web page;
determining an image scanning device (SD1, SD2) to which an operation signal for executing the image scanning process is to be transmitted in response to receiving the command;
transmitting the operation signal from the data server to the determined image scanning device;
receiving the operation signal at the image scanning device;
executing the scanning process at the image scanning device in response to receiving the operation signal;
uploading scanned data from the image scanning device to the data server or the service providing device;
storing the scanned data in a memory (2) at the data server; and
transmitting, to the service providing device indicated by the location information, the scanned data stored in the memory at the data server.

## Patentansprüche

1. Netzwerksystem (S), enthaltend eine Dienstbereitstellungs-Netzwerkvorrichtung (ES1, ES2), eine Informationsverarbeitungsvorrichtung (IP) und einem Datenserver (CS); wobei:
der Datenserver (CS) konfiguriert ist, um über ein Netzwerk (NW) mit einer Bildabtastvorrichtung (SD1, SD2) verbindbar zu sein;
die Dienstbereitstellungsvorrichtung (ES1, ES2) konfiguriert, um eine Webseite an die Informationsverarbeitungsvorrichtung (S203) zu übertragen, wobei die Webseite Betriebsinformationen zum Übertragen eines Befehls an den Datenserver (CS) umfasst, wobei der Befehl dazu dient, um zu verursachen, dass eine Bildabtastvorrichtung (SD1, SD2) einen Abtastbetrieb ausführt und umfassend Standortinformationen, die einen Standort in dem Netzwerk der Dienstbereitstellungsvorrichtung (ES1, ES2) angeben;
die Dienstbereitstellungsvorrichtung (ES1, ES2) von der Informationsverarbeitungsvorrichtung (IP) über die von der Dienstbereitstellungsvorrichtung (ES1, ES2) übertragene Webseite betrieben wird; und
der Datenserver Folgendes umfasst:
einen Prozessor (1), auf dem eine computerlesbare Anweisung gespeichert und konfiguriert ist, um den Datenserver (CS) zu steuern, um die folgenden Schritte auszuführen:
Empfangen des Befehls von der Dienstbereitstellungsvorrichtung (ES1, ES2) basierend auf dem Betrieb der Betriebsinformationen auf der Webseite,
Bestimmen einer Bildabtastvorrichtung (SD1, SD2), an die ein Betriebssignal zum Ausführen eines Bildabtastprozesses als Reaktion auf den Empfang des Befehls übertragen wird;
Übertragen des Betriebssignals an die bestimmte Bildabtastvorrichtung (SD1, SD2) über das Netzwerk (NW), um zu verursachen, dass die bestimmte Bildabtastvorrichtung (SD1, SD2) einen Bildabtastprozess ausführt;
Speichern von abgetasteten Daten, die von dem Bildabtastprozess der bestimmten Bildabtastvorrichtung (SD1, SD2) erhalten wurden, in einem Speicher an dem Datenserver (2); und
Übertragen, an die Dienstbereitstellungsvorrichtung (ES1, ES2), die durch die Standortinformationen angegeben ist, der im Speicher (2) gespeicherten Daten.

2. Netzwerksystem nach Anspruch 1,
wobei der Datenserver (CS) über das Netzwerk mit einer Vielzahl von Bildabtastvorrichtungen (SD1, SD2) verbunden ist, und
wobei der Prozessor (1) ferner konfiguriert ist, um den Datenserver (CS) zu steuern, um die folgenden Schritte auszuführen:
Erfassen von Benutzeridentifikationsinformationen, die einen Benutzer identifizieren, der die Betriebsinformationen auf der Webseite betreibt;
Speichern der Benutzeridentifikationsinformationen in dem Speicher (2) und Zuordnen der Benutzeridentifikationsinformation zu Vorrichtungeidentifikationsinformationen, die eine der Vielzahl von Bildabtastvorrichtungen (SD1, SD2) identifizieren, die den Benutzeridentifikationsinformationen entsprechen;
Bestimmen der Vorrichtungsidentifikationsinformationen, die den erfassten Benutzeridentifikationsinformationen in dem Speicher (2) entsprechen; und
Übertragen des Betriebssignals an die Bildabtastvorrichtung (SD1, SD2), die durch die bestimmten Vorrichtungeidentifikationsinformationen angegeben werden.

3. Netzwerksystem nach entweder einem der Ansprüche 1 und Anspruch 2,
wobei der Schritt des Bestimmens der Vorrichtungsinformationen den Schritt des Bestimmens der Bildabtastvorrichtung (SD1, SD2) umfasst, für die Betriebsinformationen der Webseite anleiten, einen Abtastprozess von der Vielzahl von den Bildabtastvorrichtungen (SD1, SD2) auszuführen.

4. Netzwerksystem nach Anspruch 2,
wobei der Prozessor (1) ferner konfiguriert ist, um den Datenserver (CS) zu steuern, um die folgenden Schritte auszuführen:
Erfassen von Dienstidentifikationsinformationen, die eine Dienstbereitstellungsvorrichtung (ES1, ES2) identifizieren, die konfiguriert ist, um die Webseite bereitzustellen, auf der die Betriebsinformationen angezeigt werden;
Speichern der Dienstidentifikationsinformationen und Zuordnen der Dienstidentifikationsinformationen zu den
Benutzeridentifikationsinformation und den
Vorrichtungsidentifikationsinformationen;
Bestimmen der Vorrichtungsidentifikationsinformation, die den erfassten Benutzeridentifikationsinformationen und den erfassten Dienstidentifikationsinformationen zugeordnet sind; und
Übertragen des Betriebssignals an die Bildabtastvorrichtung, die durch die bestimmten Vorrichtungsidentifikationsinformationen angegeben wird.

5. Netzwerksystem nach einem der Ansprüche 1 bis 4,
wobei der Prozessor (1) ferner konfiguriert ist, um den Datenserver (CS) zu steuern, um die folgenden Schritte auszuführen:
Erzeugen des Betriebssignals, das einen eines einseitigen Abtastmodus und eines beidseitigen Abtastmodus angibt, basierend auf dem Betrieb der Betriebsinformationen auf der Webseite;
Bestimmen der Bildabtastvorrichtung (SD1, SD2), an die das Betriebssignal übertragen werden soll; und
Übertragen des Betriebssignals, das den einseitigen Abtastmodus oder den beidseitigen Abtastmodus angibt, an die bestimmte Bildabtastvorrichtung.

6. Netzwerksystem nach einem der Ansprüche 1 bis 5,
wobei der Prozessor (1) ferner konfiguriert ist, um den Datenserver (CS) zu steuern, um die folgenden Schritte auszuführen:
Bestimmen, ob die erfassten Standortinformationen eine Dienstbereitstellungsvorrichtung (ES1, ES2) angibt, die zum Zugriff auf den Datenserver (CS) berechtigt ist;
Zulassen des Zugriffs auf die Dienstbereitstellungsvorrichtung und Ausführen des Bestimmungsschritts zum Bestimmen der Bildabtastvorrichtung (SD1, SD2), an die das Betriebssignal und der Übertragungsschritt zum Übertragen des Betriebssignals an die bestimmte Bildabtastvorrichtung über das Netzwerk, wenn die erfassten Standortinformationen eine Dienstbereitstellungsvorrichtung (ES1, ES2) angeben, das zum Zugriff auf den Datenserver berechtigt ist; und
Beschränken des Zugriffs auf die Dienstbereitstellungsvorrichtung (ES1, ES2) und Ausführen des Bestimmungsschritts zum Bestimmen der Bildabtastvorrichtung (SD1, SD2), an die das Betriebssignal und der Übertragungsschritt zum Übertragen des Betriebssignals an die bestimmte Bildabtastvorrichtung über das Netzwerk, wenn die erfassten Standortinformationen eine Dienstbereitstellungsvorrichtung (ES1, ES2) angeben, die nicht zum Zugriff auf den Datenserver berechtigt ist.

7. Netzwerksystem nach einem der Ansprüche 1 bis 6,
wobei der Prozessor (1) ferner konfiguriert ist, um den Datenserver (CS) zu steuern, um die folgenden Schritte auszuführen:
Erfassen von Dienstidentifikationsinformationen, die eine Dienstbereitstellungsvorrichtung (ES1, ES2) identifizieren, die konfiguriert ist, um die Webseite bereitzustellen, auf der die Betriebsinformationen angezeigt werden; und
Löschen der in dem Speicher (2) gespeicherten abgetasteten Daten, nachdem die Dienstbereitstellungsvorrichtung die in dem Speicher gespeicherten abgetasteten Daten erfasst hat, wenn die erfassten Dienstidentifikationsinformationen angeben, dass die Dienstbereitstellungsvorrichtung keine Datenspeicherung zulässt.

8. Netzwerksystem nach einem der Ansprüche 1 bis 7, wobei der Datenserver mit einer Bildabtastvorrichtung (SD1, SD2) verbunden ist, die konfiguriert ist, um mindestens einen auf der Bildabtastvorrichtung befindlichen Papiersatz abzutasten.

9. Netzwerksystem (S) nach einem der vorhergehenden Ansprüche, das eine Bildabtastvorrichtung (SD1, SD2) enthält, die konfiguriert ist, um ein Bild abzutasten,
wobei die Bildabtastvorrichtung umfasst:
einen zweiten Prozessor (5), auf dem computerlesbare Anweisungen gespeichert sind, und konfiguriert, um die Bildabtastvorrichtung zu steuern, um die folgenden Schritte auszuführen:
Empfangen des Betriebssignals;
Ausführen des Abtastprozesses als Reaktion auf den Empfang des Betriebssignals;
und
Hochladen der abgetasteten Daten auf den Datenserver oder die Dienstbereitstellungsvorrichtung.

10. Hochladeverfahren für ein Netzwerksystem (S), enthaltend eine Dienstbereitstellungsvorrichtung (ES1, ES2), einen Datenserver (CS), eine Bildabtastvorrichtung (SD1, SD2), das konfiguriert ist, um ein Bild abzutasten, und eine Verwaltungsvorrichtung (IP), die konfiguriert ist, um eine Webseite zu empfangen, wobei das Hochladeverfahren die folgenden Schritte umfasst:
Übertragen, von der Dienstbereitstellungsvorrichtung (ES1, ES2) an die Verwaltungsvorrichtung (S203), einer Webseite, die Betriebsinformationen zum Übertragen eines Befehls an den Datenserver (CS) umfasst, wobei der Befehl dazu dient, um zu verursachen, dass eine Bildabtastvorrichtung (SD1, SD2) einen Abtastbetrieb ausführt und umfassend Standortinformationen, die einen Standort in dem Netzwerk der Dienstbereitstellungsvorrichtung (ES1, ES2) angeben;
Betreiben der Dienstbereitstellungsvorrichtung (ES1, ES2) durch die Verwaltungsvorrichtung (IP) über die Webseite; Empfangen des Befehls vom Dienstbereitstellungsvorrichtung mit dem Datenserver (CS) basierend auf den Betrieb von Betriebsinformationen auf der Webseite;
Bestimmen einer Bildabtastvorrichtung (SD1, SD2), an die ein Betriebssignal zum Ausführen des Bildabtastprozesses als Reaktion auf den Empfang des Befehls übertragen werden soll;
Übertragen des Betriebssignals von dem Datenserver an die bestimmte
Bildabtastvorrichtung;
Empfangen des Betriebssignals an der Bildabtastvorrichtung;
Ausführen des Abtastprozesses an der Bildabtastvorrichtung als Reaktion auf den Empfang des Betriebssignals;
Hochladen abgetasteter Daten von der Bildabtastvorrichtung auf den Datenserver oder die
Dienstbereitstellungsvorrichtung;
Speichern der abgetasteten Daten in einem Speicher (2) auf dem Datenserver; und Übertragen der abgetasteten Daten, die im Speicher auf dem Datenservers gespeichert sind,
an die Dienstbereitstellungsvorrichtung, die durch die Standortsinformationen angegeben ist.

## Revendications

1. Système de réseau (S) comprenant un dispositif de réseau fournisseur de service (ES1, ES2), un dispositif de traitement d'informations (IP) et un serveur de données (CS) ; dans lequel :
le serveur de données (CS) est configuré pour pouvoir être connecté à un dispositif de balayage d'images (SD1, SD2) via un réseau (NW) ;
le dispositif fournisseur de service (ES1, ES2) est configuré pour transmettre une page web au dispositif de traitement d'informations (S203), la page web comprenant des informations de fonctionnement permettant de transmettre une commande au serveur de données (CS), la commande servant à permettre à un dispositif de balayage d'images (SD1, SD2) à exécuter une opération de balayage et comprenant des informations de localisation indiquant un emplacement, dans le réseau, du dispositif fournisseur de service (ES1, ES2) ;
le dispositif fournisseur de service (ES1, ES2) est opéré par le dispositif de traitement d'informations (IP) via la page web transmise depuis le dispositif fournisseur de service (ES1, ES2) ; et
le serveur de données comprend :
un processeur (1) sur lequel est stockée une instruction lisible par un ordinateur et configuré pour contrôler le serveur de données (CS) afin d'exécuter les étapes consistant à :
recevoir la commande du dispositif fournisseur de service (ES1, ES2), en fonction du fonctionnement des informations d'exploitation dans la page web ;
déterminer un dispositif de balayage d'images (SD1, SD2) auquel un signal d'opération pour exécuter un processus de balayage d'image est transmis en réponse à la réception de la commande ;
transmettre le signal d'opération au dispositif de balayage d'images (SD1, SD2) déterminé via le réseau (NW) pour amener le dispositif de balayage d'images (SD1, SD2) déterminé à exécuter un processus de balayage d'images ;
stocker des données balayées obtenues à partir du processus de balayage d'images du dispositif de balayage d'images (SD1, SD2) déterminé dans une mémoire sur le serveur de données (2) ; et
transmettre, au dispositif fournisseur de service (ES1, ES2) indiqué par les informations de localisation, les données balayées stockées dans la mémoire (2).

2. Système de réseau selon la revendication 1,
dans lequel le serveur de données (CS) est connecté à une pluralité de dispositifs de balayage d'images (SD1, SD2) via le réseau, et
dans lequel le processeur (1) est en outre configuré pour contrôler le serveur de données (CS) pour exécuter les étapes consistant à :
acquérir des informations d'identification d'utilisateur identifiant un utilisateur exploitant les informations d'opération dans la page web ;
stocker les informations d'identification d'utilisateur dans la mémoire (2) et associer les informations d'identification d'utilisateur à des informations d'identification de dispositif qui identifient l'un de la pluralité de dispositifs de balayage d'images (SD1, SD2) correspondant aux informations d'identification d'utilisateur ;
déterminer les informations d'identification de dispositif correspondant aux informations d'identification d'utilisateur acquises dans la mémoire (2) ; et
transmettre le signal d'opération au dispositif de balayage d'images (SD1, SD2) indiqué par les informations d'identification de dispositif déterminées.

3. Système de réseau selon l'une quelconque des revendications 1 et 2, dans lequel l'étape consistant à déterminer les informations d'identification de dispositif comprend l'étape consistant à déterminer le dispositif de balayage d'images (SD1, SD2), pour lequel des informations de fonctionnement de la page web ordonnent à exécuter un processus de balayage à partir de la pluralité de dispositifs de balayage d'images (SD1, SD2).

4. Système de réseau selon la revendication 2,
dans lequel le processeur (1) est en outre configuré pour commander le serveur de données (CS) afin d'exécuter les étapes consistant à :
acquérir des informations d'identification de service qui identifient un dispositif fournisseur de service (ES1, ES2) configuré pour fournir la page web sur laquelle les informations d'opération sont affichées ;
stocker les informations d'identification de service et associer les informations d'identification de service aux informations d'identification d'utilisateur et aux informations d'identification de dispositif ;
déterminer les informations d'identification de dispositif associées aux informations d'identification d'utilisateur acquises et aux informations d'identification de service acquises ; et
transmettre le signal d'opération au dispositif de balayage d'images indiqué par les informations d'identification de dispositif déterminées.

5. Système de réseau selon l'une quelconque des revendications 1 à 4,
dans lequel le processeur (1) est en outre configuré pour commander le serveur de données (CS) afin d'exécuter les étapes consistant à :
générer le signal d'opération indiquant l'un des modes de balayage unilatéral et un mode de balayage bilatéral basé sur le fonctionnement des informations d'opération dans la page web ;
déterminer le dispositif de balayage d'images (SD1, SD2) auquel le signal d'opération doit être transmis ; et
transmettre le signal d'opération indiquant l'un des modes de balayage unilatéral et mode de balayage bilatéral au dispositif de balayage d'images déterminé.

6. Système de réseau selon l'une quelconque des revendications 1 à 5,
dans lequel le processeur (1) est en outre configuré pour commander le serveur de données (CS) afin d'exécuter les étapes consistant à :
déterminer si les informations de localisation acquises indiquent un dispositif fournisseur de service (ES1, ES2) autorisé à accéder au serveur de données (CS) ;
permettre l'accès du dispositif fournisseur de service et l'exécution de l'étape de détermination pour déterminer le dispositif de balayage d'images (SD1, SD2) auquel le signal d'opération et l'étape de transmission pour transmettre le signal d'opération au dispositif de balayage d'images déterminé via le réseau, lorsque les informations de localisation acquises indiquent un dispositif fournisseur de service (ES1, ES2) autorisé à accéder au serveur de données ; et
restreindre l'accès du dispositif fournisseur de service (ES1, ES2) et exécuter l'étape de détermination pour déterminer le dispositif de balayage d'images (SD1, SD2) auquel le signal d'opération et l'étape de transmission pour transmettre le signal d'opération au dispositif de balayage d'images déterminé via le réseau, lorsque les informations de localisation acquises indiquent un dispositif fournisseur de service (ES1, ES2) non autorisé à accéder au serveur de données.

7. Système de réseau selon l'une quelconque des revendications 1 à 6,
dans lequel le processeur (1) est en outre configuré pour commander le serveur de données (CS) afin d'exécuter les étapes consistant à :
acquérir des informations d'identification de service identifiant un dispositif fournisseur de service (ES1, ES2) étant configuré pour fournir la page web sur laquelle les informations de fonctionnement sont affichées ; et
supprimer les données balayées stockées dans la mémoire (2) après que le dispositif fournisseur de services a acquis les données balayées stockées dans la mémoire, lorsque les informations d'identification de service acquises indiquent que le dispositif fournisseur de services ne permet pas le stockage de données.

8. Système de réseau selon l'une quelconque des revendications 1 à 7, dans lequel le serveur de données est connecté à un dispositif de balayage d'images (SD1, SD2) configuré pour balayer au moins un jeu de papiers sur le dispositif de balayage d'images.

9. Système de réseau (S) selon l'une quelconque des revendications précédentes, comprenant un dispositif de balayage d'images (SD1, SD2) configuré pour balayer une image,
dans lequel le dispositif de balayage d'images comprend :
un second processeur (5) sur lequel sont stockées des instructions lisibles par un ordinateur et configuré pour commander le dispositif de balayage d'images afin d'exécuter les étapes consistant à :
recevoir le signal d'opération ;
exécuter le processus de balayage en réponse à la réception du signal d'opération ; et
télécharger les données balayées sur le serveur de données ou le dispositif fournisseur de services.

10. Procédé de téléchargement pour un système de réseau (S) comprenant un dispositif fournisseur de service (ES1, ES2), un serveur de données (CS), un dispositif de balayage d'images (SD1, SD2) configuré pour balayer une image et un dispositif de gestion (IP) configuré pour recevoir une page web, le procédé de téléchargement comprenant les étapes consistant à :
transmettre du dispositif fournisseur de service (ES1, ES2) au dispositif de gestion (S203), une page web comprenant des informations de fonctionnement permettant de transmettre une commande au serveur de données (CS), la commande permettant à un dispositif de balayage d'images (SD1, SD2) d'exécuter une opération de balayage et comprenant des informations de localisation indiquant un emplacement, dans le système de réseau, du dispositif fournisseur de service (ES1, ES2) ;
faire fonctionner le dispositif fournisseur de services (ES1, ES2) par le dispositif de gestion (IP) via la page web ;
recevoir avec le serveur de données (CS) la commande du dispositif fournisseur de service, sur la base du fonctionnement des informations d'exploitation dans la page web;
déterminer un dispositif de balayage d'images (SD1, SD2) auquel un signal d'opération destiné à exécuter le processus de balayage d'images doit être transmis en réponse à la réception de la commande ;
transmettre le signal d'opération du serveur de données au dispositif de balayage d'images déterminé ;
recevoir le signal de fonctionnement sur le dispositif de balayage d'images ;
exécuter le processus de balayage sur le dispositif de balayage d'images en réponse à la réception du signal d'opération ;
télécharger des données balayées du dispositif de balayage d'images vers le serveur de données ou le dispositif fournisseur de services;
stocker les données balayées dans une mémoire (2) sur le serveur de données ; et
transmettre, au dispositif fournisseur service indiqué par les informations de localisation, les données numérisées stockées dans la mémoire sur le serveur de données.
